(19) Europäisches Patentamt
European Patent Office
Office européen des brevets

(11) **EP 3 044 767 B1**

(12) **EUROPÄISCHE PATENTSCHRIFT**

(45) Veröffentlichungstag und Bekanntmachung des Hinweises auf die Patenterteilung:
**31.08.2022   Patentblatt 2022/35**

(21) Anmeldenummer: **14783995.5**

(22) Anmeldetag: **11.09.2014**

(51) Internationale Patentklassifikation (IPC):
**G07D 7/182** (2016.01)   **G07D 7/183** (2016.01)
**G07D 7/08** (2006.01)   **G07D 7/187** (2016.01)
**G07D 7/20** (2016.01)

(52) Gemeinsame Patentklassifikation (CPC):
**G07D 7/08; G07D 7/182; G07D 7/183; G07D 7/187; G07D 7/2075**

(86) Internationale Anmeldenummer:
**PCT/EP2014/002465**

(87) Internationale Veröffentlichungsnummer:
**WO 2015/036120 (19.03.2015 Gazette 2015/11)**

(54) **VERFAHREN UND VORRICHTUNG ZUM PRÜFEN VON WERTDOKUMENTEN AUF IRREGULARITÄTEN**

METHOD AND DEVICE FOR THE TESTING FOR IRREGULARITIES OF VALUE DOCUMENTS

PROCÉDÉ ET DISPOSITIF POUR LA DETECTION D'IRRÉGULARITÉS D'UN DOCUMENT DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2013   DE 102013015224**

(43) Veröffentlichungstag der Anmeldung:
**20.07.2016   Patentblatt 2016/29**

(73) Patentinhaber: **Giesecke+Devrient Currency Technology GmbH**
**81677 München (DE)**

(72) Erfinder:
• **FEULNER, Johannes**
**81925 München (DE)**
• **DOMKE, Jan**
**85591 Vaterstetten (DE)**

(74) Vertreter: **Giesecke + Devrient IP**
**Prinzregentenstraße 159**
**81677 München (DE)**

(56) Entgegenhaltungen:
**WO-A1-2008/009384      US-A1- 2011 226 061**

• **GNANADESIKAN R: "Robust Estimates, Residuals, and Outlier Detection with Multiresponse Data", BIOMETRICS, BIOMETRIC SOCIETY, RALEIGH, NC, US, Bd. 28, Nr. 1 1. März 1972 (1972-03-01), Seiten 81-124,1142, XP008173993, ISSN: 0006-341X Gefunden im Internet: URL:http://www.jstor.org/stable/2528963 [gefunden am 2015-01-05]**

**Beschreibung**

Die vorliegende Erfindung betrifft ein Verfahren zum Prüfen eines Wertdokumentes eines vorgegebenen Wertdokumenttyps auf das Vorhandensein wenigstens einer Irregularität wenigstens eines vorgegebenen Typs, vorzugsweise wenigstens einer Anhaftung, vorzugsweise eines Klebestreifens, und/oder wenigstens einer Falte und/oder eines Materialabtrags, und Mittel zur Durchführung des Verfahrens.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandensein ein Indiz für die Echtheit, d.h. die Herstellung durch eine dazu befugte Stelle, ist. Wichtige Beispiele für solche Wertdokumente sind Coupons, Gutscheine, Schecks und insbesondere Banknoten.

Solche Wertdokumente können Irregularitäten bzw. Defekte aufweisen, die sie für eine zukünftige Verwendung ungeeignet erscheinen lassen oder gar als eventuell nur schwachen Verdacht auf das Vorliegen einer Fälschung anzusehen sind.

Ein Beispiel für eine mangelnde Eignung für eine zukünftige Verwendung kann beispielsweise das Vorhandensein eines Klebestreifens auf einem Wertdokument, insbesondere einer Banknote, sein. Solche Klebestreifen werden teilweise verwendet, um Risse in dem jeweiligen Wertdokument zu reparieren. Das schadhafte Wertdokument sollte daher möglichst aus dem Verkehr gezogen werden. Ein anderes Beispiel kann darin bestehen, dass bei Polymerbanknoten Bereiche einer auf das Polymersubstrat vor bzw. beim Druck aufgebrachten opaken Schicht im Laufe der Zeit abplatzen, so dass ein Materialabtrag entsteht.

Klebestreifen können aber auch dazu benutzt werden, Teile von verschiedenen Wertdokumenten miteinander zu verbinden, um eine Fälschung herzustellen.

Zur Erkennung von Klebestreifen kann ein Wertdokument beispielsweise mittels Ultraschalltransmission untersucht werden. An Hand der Messdaten kann dann geprüft werden, ob ein Hinweis auf das Vorliegen eines Klebestreifens erkannt werden kann.

Eine weitere Form von Irregularitäten, die die Umlauffähigkeit von Banknoten beeinträchtigen kann, sind Falten und Knitter. In US6595060B2 ist beispielsweise ein Verfahren zur Bestimmung von Strukturinhomogenitäten in Blattgut, insbesondere aufgrund von Knitterfalten oder Rissen, beschrieben, bei dem Ultraschall verwendet wird. Im Folgenden werden unter Falten auch Knitter verstanden.

Bekannte derartige Verfahren leiden jedoch darunter, dass die Ultraschalltransmissionsdaten bedingt durch die Art der Messung und die Eigenschaften bestimmter Typen von Wertdokumenten stark verrauscht sind und die Erkennung von Klebestreifen oder Falten oder Materialabträgen daher schwierig sein kann. Auch ist die Ortsauflösung wesentlich geringer als bei optischen Untersuchungen.

In US 2011/0226061 A1 ist eine Blattbearbeitungsvorrichtung beschrieben, die einen Ultraschallwellenerzeuger, ein Detektorfeld und eine Beurteilungseinheit aufweist. Der Ultraschallwellenerzeuger strahlt Ultraschallwellen auf ein transportiertes Blatt von einer Seite des Blattes. Das Detektorfeld ist auf der anderen Seite des Blattes angeordnet und detektiert den Schalldruck der Ultraschallwellen, die durch das Blatt treten. Die Beurteilungseinheit beurteilt einen Zustand des Blattes dadurch, dass sie einen vorgegebenen Standardwert mit dem Schalldruck vergleicht.

Der vorliegenden Erfindung liegt daher die Aufgabe zugrunde, ein Verfahren zum Prüfen eines Wertdokumentes eines vorgegebenen Wertdokumenttyps auf das Vorhandensein wenigstens einer Irregularität wenigstens eines vorgegebenen Typs, vorzugsweise einer Anhaftung, besonders bevorzugt eines Klebestreifens, und/oder einer Falte und/oder einer Irregularität in Form wenigstens eines Materialabtrags, anzugeben, das eine gute Erkennung solcher Irregularitäten erlaubt, und Mittel zur Durchführung des Verfahrens bereitzustellen.

Die Aufgabe wird gelöst durch die Gegenstände der unabhängigen Ansprüche.

Insbesondere wird die Aufgabe gelöst durch ein Verfahren zum Prüfen eines Wertdokumentes eines vorgegebenen Wertdokumenttyps auf das Vorhandensein wenigstens einer Irregularität wenigstens eines vorgegebenen Typs, bei dem ein Ultraschalldatensatz erfasst wird, der ortsaufgelöst wenigstens eine Ultraschalleigenschaft, vorzugsweise die Ultraschalltransmission, des Wertdokuments beschreibt. Es wird ein Abweichungsdatensatz ermittelt, der ortsaufgelöst eine Abweichung zwischen dem Ultraschalldatensatz und einem Modell beschreibt und so ermittelt ist, dass die durch ihn beschriebene Abweichung in Bezug auf das Modell minimal ist, wobei das Modell ein Modell für die Ortsabhängigkeit der wenigstens einen Ultraschalleigenschaft von Referenzwertdokumenten des vorgegebenen Wertdokumenttyps ohne Irregularitäten des wenigstens einen vorgegebenen Typs umfasst. Unter Verwendung des Abweichungsdatensatzes wird geprüft, ob ein Hinweis auf eine Irregularität des wenigstens einen vorgegebenen Typs auf dem Wertdokument vorliegt.

Die Aufgabe wird weiter gelöst durch eine Vorrichtung zum Prüfen eines Wertdokumentes eines vorgegebenen Wertdokumenttyps auf das Vorhandensein wenigstens einer Irregularität wenigstens eines vorgegebenen Typs mit einer Auswerteeinrichtung, die dazu ausgebildet ist, ein erfindungsgemäßes Verfahren auszuführen. Die Vorrichtung ist dazu ausgebildet, einen Ultraschalldatensatz zu erfassen, der ortsaufgelöst wenigstens eine Ultraschalleigenschaft, vorzugsweise die Ultraschalltransmission, des Wertdokuments beschreibt, einen Abweichungsdatensatz zu ermitteln, der ortsaufgelöst eine Abweichung zwischen dem Ultraschalldatensatz und einem Modell beschreibt und so ermittelt ist, dass die durch ihn beschriebene Abweichung in Bezug auf das Modell minimal ist, wobei das Modell ein Modell für die Ortsabhängigkeit der wenigstens einen Ultraschalleigenschaft von Referenzwertdokumenten des vorgegebenen Wertdokumenttyps ohne Irregularitäten des wenigstens einen vorgegebenen Typs umfasst, und unter Verwendung des Abweichungsdatensatzes zu prüfen, ob ein Hinweis auf eine Irregularität des vorgegebenen Typs auf dem Wertdokument vorliegt.

Zur Durchführung des Verfahrens verfügt die Vorrichtung über die Auswerteeinrichtung. Diese kann eine Datenverarbeitungseinrichtung, die beispielsweise einen Computer oder wenigstens einen Prozessor und/oder wenigstens ein FPGA aufweisen kann, zur Verarbeitung der Ultraschalldaten aufweisen. Die Auswerteeinrichtung kann einen Speicher aufweisen, in dem ein Computerprogramm gespeichert ist, so dass die Auswerteeinrichtung, vorzugsweise die Datenverarbeitungseinrichtung bei Ausführung des Computerprogramms das erfindungsgemäße Verfahren ausführt.

Die Aufgabe wird daher auch gelöst durch ein Computerprogramm zur Ausführung mittels einer Datenverarbeitungseinrichtung, das Programmcode aufweist, bei dessen Ausführung die Datenverarbeitungseinrichtung ein erfindungsgemäßes Verfahren ausführt.

Die Aufgabe wird weiter gelöst durch einen physischen Datenträger, der mittels einer Datenverarbeitungseinrichtung lesbar ist und auf dem ein erfindungsgemäßes Computerprogramm gespeichert ist.

Das Verfahren und die Vorrichtung betreffen die Prüfung eines Wertdokuments eines vorgegebenen Wertdokumenttyps. Die Wertdokumenttypen können dadurch gegeben sein, dass für sie jeweils unterschiedliche Modelle im Sinne der Erfindung notwendig sind. Ein Wertdokumenttyp kann bei Wertdokumenten in Form von Banknoten insbesondere durch die Währung und die Stückelung bzw. Denomination und gegebenenfalls die Serie oder Ausgabe gegeben sein. Der Wertdokumenttyp bei Banknoten in Bezug auf die folgende Bearbeitung kann auch noch durch die Orientierung der Banknoten genauer bestimmt sein. Unter der Orientierung wird dabei eine der vier möglichen Lagen der Banknote bei der Erfassung der Ultraschalleigenschaft verstanden, die durch Drehung um die mittlere Längs- und/oder Querachse der Banknote ineinander überführbar sind.

Die Wertdokumente werden auf das Vorhandensein wenigstens einer Irregularität wenigstens eines vorgegebenen Typs geprüft. Die Referenzwertdokumente weisen vorzugsweise Irregularitäten des wenigstens einen vorgegebenen Typs, auf die hin geprüft wird, nicht auf.

Unter einer Irregularität wenigstens eines vorgegebenen Typs wird je nach Ausführungsform eine Irregularität nur eines vorgegebenen Typs oder eine Irregularität eines von mehreren vorgegebenen Typen verstanden. Insbesondere können folgende Typen allein oder in Kombination in Betracht kommen.

So können Irregularitäten des wenigstens eine vorgegebene Typ Irregularitäten vom Typ einer Anhaftung, vorzugsweise eines Klebestreifens und/oder Irregularitäten vom Typ einer Falte umfassen. Der Typ der Irregularität kann also bevorzugt eine Anhaftung, vorzugsweise ein Klebestreifen, sein. Unter Anhaftungen werden jegliche Elemente verstanden, die mit dem Wertdokument verbunden und wenigstens teilweise auf dessen Oberfläche angeordnet sind. Hierbei kann es sich beispielsweise um Bereiche mit einer Farbe hinreichenden Flächengewichts oder insbesondere auch um auf das Wertdokument geklebte Klebestreifen oder andere Klebeelemente handeln. Irregularitäten dieses Typs werden auch als Irregularitäten in Form von Anhaftungen bezeichnet. Der Typ der Irregularität kann also bevorzugt auch eine Falte sein. Unter einer Falte werden im Rahmen der Erfindung nur solche Falten verstanden, die zu einer durch einen Sensor erkennbaren Änderung der Ultraschalleigenschaft führen. Irregularitäten dieses Typs werden auch als Irregularitäten in Form von Falten bezeichnet.

Irregularitäten der Typen Anhaftung und/ oder Falte sind Irregularitäten in Form von Anhaftungen und/oder Falten.

Der Typ der Irregularität kann bevorzugt auch ein Materialabtrag sein. Die Irregularität dieses Typs wird auch als Irregularität in Form eines Materialabtrags bezeichnet. Materialabträge im Rahmen der vorliegenden Erfindung sind Bereiche des Wertdokuments, deren Flächengewicht gegenüber entsprechenden Bereichen von vorgegebenen Referenzwertdokumenten des vorgegebenen Wertdokumenttyps reduziert ist. Insbesondere kann es sich bei Wertdokumente, die eine Polymerschicht mit einer darauf aufgebrachten opaken Schicht aufweisen, um Bereiche handeln, in denen die opake Schicht beschädigt, insbesondere nicht mehr vorhanden ist.

Vorzugsweise erfolgt die Prüfung entweder nur auf das Vorhandensein wenigstens einer Irregularität in Form einer Anhaftung und/ oder einer Falte oder nur auf das Vorhandensein wenigstens einer Irregularität in Form eines Materialabtrags. Im ersten Fall brauchen die Referenzwertdokumente dann vorzugsweise nur keine Irregularitäten in Form von Klebestreifen und Falten aufzuweisen, im zweiten Fall nur keine Irregularitäten in Form von Materialabträgen. Besonders bevorzugt erfolgt die Prüfung entweder nur auf das Vorhandensein wenigstens einer Irregularität in Form einer Anhaftung oder nur auf das Vorhandensein wenigstens einer Irregularität in Form einer Falte oder nur auf das Vorhandensein wenigstens einer Irregularität in Form eines Materialabtrags. Im ersten Fall brauchen die Referenzwertdokumente dann vorzugsweise nur keine Irregularitäten in Form von Klebestreifen aufzuweisen, im zweiten Fall nur keine Irregularitäten in Form von Falten und im dritten Fall nur keine Irregularitäten in Form von Materialabträgen.

Zur Prüfung wird ein Ultraschalldatensatz erfasst, der ortsaufgelöst wenigstens eine Ultraschalleigenschaft des Wertdokuments beschreibt. Bei der Ultraschalleigenschaft kann es sich beispielsweise um Phasenänderungen bei Remission und/oder Transmission von Ultraschall an bzw. durch das Wertdokument oder vorzugsweise das Remissionsvermögen oder die Remission bzw. Remissionsintensität oder -amplitude für Ultraschall in einem vorgegebenen Frequenzbereich oder das Transmissionsvermögen oder die Transmission bzw. Transmissionsintensität oder -amplitude für Ultraschall in einem vorgegeben Frequenzbereich handeln. Unter Ultraschall wird dabei Schall mit Frequenzen in einem Bereich zwischen 50 kHz und 2 MHz, vorzugsweise zwischen 50 kHz und 1 MHz, besonders bevorzugt zwischen 100 kHz und 1 MHz verstanden. Ganz besonders bevorzugt wird Ultraschall mit Frequenzen im Bereich zwischen 100 kHz und 500 kHz verwendet.

Der Ultraschalldatensatz beschreibt die Ultraschalleigenschaft ortsaufgelöst, das heißt, dass für eine Vielzahl von Messflecken auf dem Wertdokument dem jeweiligen Ort des Messflecks entsprechende, die Ultraschalleigenschaft beschreibende Ultraschalldaten gegeben sind. Die Orte können dabei explizit in dem Ultraschalldatensatz angegeben sein. Es ist aber auch möglich, dass der Ort implizit durch die Anordnung der Ultraschalldaten in dem Ultraschalldatensatz gegeben ist; in diesem Fall ist eine Regel dafür vorgegeben, welche Orte welchen Ultraschalldaten in dem Ultraschalldatensatz entsprechen. Vorzugsweise werden Ultraschalldaten für Orte erfasst, die über das gesamte Wertdokument verteilt sind. Die Orte können unregelmäßig verteilt sein, vorzugsweise sind sie jedoch regelmäßig, besonders bevorzugt auf den Knoten eines Rechteckgitters verteilt.

Prinzipiell genügt es, dass der Ultraschalldatensatz nur erfasst, beispielsweise gelesen oder empfangen wird. Die Vorrichtung, vorzugsweise die Auswerteeinrichtung, kann hierzu eine geeignete Schnittstelle aufweisen, über die Ultraschalldatensätze erfasst werden können.

Vorzugsweise werden bei dem Verfahren die Ultraschalldaten jedoch mittels eines Ultraschallsensors erfasst. Bei der Vorrichtung ist es dann bevorzugt, dass die Vorrichtung weiter einen Ultraschallsensor zur ortsaufgelösten Messung der wenigstens einen Ultraschalleigenschaft eines Wertdokuments und Bildung eines Ultraschalldatensatzes für das Wertdokument aufweist, und dass die Auswerteeinrichtung mit dem Ultraschallsensor über eine Signalverbindung gekoppelt und dazu ausgebildet ist, als Ultraschalldatensatz einen Ultraschalldatensatz des Ultraschallsensors zu erfassen.

Der Ultraschallsensor kann zur Messung der Ultraschalleigenschaft bei einem in Bezug auf den Ultraschallsensor ruhenden Wertdokument ausgebildet sein. Es ist jedoch bevorzugt, dass der Ultraschallsensor so ausgebildet ist, dass er die Ultraschalleigenschaft des Wertdokuments während einer Bewegung des Wertdokuments, insbesondere während eines Transports des Wertdokuments an dem Ultraschallsensor vorbei oder durch diesen hindurch, misst. Hierzu kann eine Transporteinrichtung vorgesehen sein, die das Wertdokument mit einer vorgegebenen Transportgeschwindigkeit an dem Ultraschallsensor vorbei oder durch diesen hindurch transportiert.

Der Ultraschallsensor kann vorzugsweise mehrere Ultraschallwandler aufweisen, die als Ultraschallsender und/oder -empfänger dienen können. Insbesondere kann der Ultraschallsensor ein Transmissionsultraschallsensor sein. Bei der Bildung des Ultraschalldatensatzes können die Messsignale der als Ultraschallempfänger fungierenden Ultraschallwandler noch einer Vorverarbeitung unterzogen werden.

Der erfasste Ultraschalldatensatz wird dann mit dem Modell verglichen. Genauer wird aus dem erfassten Ultraschalldatensatz der Abweichungsdatensatz ermittelt, der ortsaufgelöst eine Abweichung zwischen dem erfassten Ultraschalldatensatz und dem Modell beschreibt. Hierzu ist für den Wertdokumenttyp das Modell vorgegeben, das ein Modell für die Ortsabhängigkeit der wenigstens einen Ultraschalleigenschaft von Referenzwertdokumenten des vorgegebenen Typs ohne Irregularitäten des wenigstens einen vorgegebenen Typs, vorzugsweise je nachdem wenigstens einem vorgegebenen Typ ohne Anhaftungen und/oder Falten und/oder Materialabträgen, umfasst oder ist. Das Modell beschreibt daher näherungsweise die wenigstens eine Ultraschalleigenschaft der Referenzwertdokumente ortsaufgelöst. Das Modell beschreibt die Ortsabhängigkeit der Ultraschalleigenschaft bzw. die ortsabhängige Ultraschalleigenschaft der Referenzwertdokumente modellhaft, braucht die Ortsabhängigkeit der Ultraschalleigenschaft also nicht exakt wiederzugeben, sondern, wie durch den Begriff "Modell" impliziert, nur näherungsweise, d. h. mit gewissen Fehlern. Allerdings dürfen die Fehler, wie durch den Begriff "Modell" impliziert, nicht beliebig groß werden. Den zulässigen Fehler bzw. die Genauigkeit des Modells wählt der Fachmann so, dass das erfindungsgemäße Verfahren insbesondere unter den Gesichtspunkten Ausführungsgeschwindigkeit und Erkennungsgenauigkeit den Anforderungen entsprechend arbeitet.

Das Modell definiert eine Vielzahl von sich voneinander unterscheidenden Modelldatensätzen, die die wenigstens eine Ultraschalleigenschaft ortsabhängig beschreiben. Bei der Vorrichtung definiert das Modell eine Vielzahl von sich voneinander unterscheidenden Modelldatensätzen, die die wenigstens eine Ultraschalleigenschaft ortsabhängig beschreiben. Hierdurch können besonders gut Variationen in den Ultraschalleigenschaften der Wertdokumente des vorgegebenen Wertdokumenttyps modelliert werden, die durch den Wertdokumenttyp und/ oder die Herstellung, nicht aber später angebrachte Anhaftungen oder erzeugte Falten oder später erfolgte Materialabträge verursacht sind. Hierdurch kann die Trennschärfe des Verfahrens wesentlich erhöht werden.

Das Modell kann dadurch vorgegeben sein, dass Modelldatensätze explizit vorgegeben werden. Vorzugsweise ist das Modell jedoch dadurch vorgegeben, dass Modellparameter und eine Vorschrift zur Ermittlung von Modelldatensätzen unter Verwendung der Modellparameter wenigstens so gegeben sind, dass der Abweichungsdatensatz ermittelt werden kann.

Der Abweichungsdatensatz wird so ermittelt, dass die von ihm beschriebene Abweichung in Bezug auf das Modell, d. h. von dem Modell, minimal ist. Zur Ermittlung der Größe einer Abweichung zwischen einem Ultraschalldatensatz und dem Modell kann ein Abweichungsmaß vorgegeben sein, das in Abhängigkeit von dem Modell und der Darstellung der Ultraschalldatensätze gewählt ist. Eine Abweichung ist dann minimal, wenn das Abweichungsmaß minimal ist. Vorzugsweise ist die Abweichung zwischen dem Ultraschalldatensatz und dem Modell eine Abweichung zwischen dem Ultraschalldatensatz und einem der Modelldatensätze.

Dieser Abweichungsdatensatz wird neben den Abweichungen, die zwischen dem Modell und Wertdokumenten ohne Irregularitäten aufgrund der Verwendung des Modells auftreten können, Abweichungen enthalten, die durch Irregularitäten des wenigstens einen vorgegebenen Typs, vorzugsweise Anhaftungen und/oder Falten und/oder Materialabträge, bedingt sind. Durch die Verwendung eines Modells, das die Ortsabhängigkeit der Ultraschalleigenschaft beschreibt, sind Abweichungen aufgrund von Irregularitäten des wenigstens einen vorgegebenen Typs, vorzugsweise Anhaftungen und/oder Falten und/oder Materialabträgen, deutlicher erkennbar. Insbesondere wenn ein Modell für Referenzwertdokumente verwendet wird, das eine Vielzahl von Modelldatensätzen definiert, können Variationen der Ultraschalleigenschaft durch Schwankungen in den Eigenschaften von Wertdokumenten des vorgegebenen Wertdokumenttyps, bei Banknoten beispielsweise der Lage von Wasserzeichen und/oder Sicherheitsfaden, von solchen durch Anhaftungen oder Falten oder Materialabträgen getrennt werden. Dies erleichtert die Prüfung in dem folgenden Schritt.

Darin wird unter Verwendung des Abweichungsdatensatzes geprüft, ob ein Hinweis auf eine Irregularität des wenigstens einen vorgegebenen Typs, vorzugsweise, in Form wenigstens einer Anhaftung, vorzugsweise eines Klebestreifens, und/oder einer Falte und/oder wenigstens eine Irregularität in Form eines Materialabtrags, auf dem Wertdokument vorliegt, oder nicht. Auf diese Weise kann eine sehr hohe Genauigkeit bzw. Zuverlässigkeit der Erkennung von Irregularitäten des wenigstens einen vorgegebenen Typs, vorzugsweise Anhaftungen und/oder Falten und/oder von Materialabträgen, erreicht werden, auch wenn der Einfluss der jeweiligen Irregularitäten, beispielsweise Anhaftungen bzw. Falten bzw. der Materialabträge, auf die wenigstens eine Ultraschalleigenschaft nicht sehr groß ist. Auch ergibt sich eine hohe Zuverlässigkeit der Erkennung.

Als Ergebnis des Prüfens kann ein Datum gespeichert oder ein Signal gebildet werden, das beschreibt, ob der genannte Hinweis vorliegt oder nicht. Ein solches Datum oder Signal kann direkt oder optional in Verbindung mit anderen Daten und/oder Signalen, die Hinweise auf das Vorliegen anderer Irregularitäten beschreiben, zum Sortieren des Wertdokuments verwendet werden.

Prinzipiell brauchen die Modelldatensätze nicht wie die Ultraschalldatensätze aufgebaut bzw. definiert zu sein, solange das Abweichungsmaß es erlaubt eine minimale Abweichung zu ermitteln. Vorzugsweise enthalten die Ultraschalldatensätze jedoch jeweils Ultraschalldaten für eine für den Wertdokumenttyp vorgegebene Anzahl N von Orten, die jeweils die wenigstens eine Ultraschalleigenschaft für die jeweiligen Orte beschreiben. Entsprechend enthalten dann vorzugsweise die Modelldatensätze jeweils Modelldaten für die wenigstens eine Ultraschalleigenschaft für die vorgegebene Anzahl N von Orten. Damit wird ein einfacher Vergleich der Ultraschalldaten und der Modelldaten für jeden Ort ermöglicht. Insbesondere erlaubt dies eine einfache Formulierung eines Abstandsmaßes, beispielsweise als Summe der quadrierten Differenzen zwischen den Ultraschalldaten und den Modelldaten über die gegebenen Orte. Bei einer Darstellung der Ultraschalldatensätze und der Modelldatensätze durch Vektoren kann das Abweichungsmaß beispielsweise durch die euklidische oder L2-Norm des Differenzvektors gegeben sein, der durch die Differenz aus dem den Ultraschalldatensatz darstellenden Vektor und dem den Modelldatensatz beschreibenden Vektor gegeben ist.

Vorzugsweise enthalten bei dem Verfahren die Ultraschalldatensätze jeweils Ultraschalldaten für eine für den Wertdokumenttyp vorgegebene Anzahl N von Orten, die jeweils die wenigstens eine Ultraschalleigenschaft für die jeweiligen Orte beschreiben, und die Modelldatensätze enthalten jeweils Modelldaten für die wenigstens eine Ultraschalleigenschaft für die vorgegebene Anzahl N von Orten. Entsprechend enthalten bei dem Vorrichtung vorzugsweise die Ultraschalldatensätze jeweils Ultraschalldaten für eine für den Wertdokumenttyp vorgegebene Anzahl N von Orten, die jeweils die wenigstens eine Ultraschalleigenschaft für die jeweiligen Orte beschreiben, und die Modelldatensätze enthalten jeweils Modelldaten für die wenigstens eine Ultraschalleigenschaft für die vorgegebene Anzahl N von Orten. Die Modelldatensätze liegen dann vorzugsweise in einem vorgegebenen Teilbereich eines N-dimensionalen Raums möglicher Ultraschalldaten. Ein solches Modell stellt damit eine sehr große Anzahl von Modelldatensätzen bereit. Darüber hinaus können die Modelldatensätze ein Kontinuum bilden, was die Ermittlung des Abweichungsdatensatzes stark vereinfachen kann, da die Ergebnisse von Minimierungsverfahren verwendet werden können.

Vorzugsweise ist bei dem Verfahren der Teilbereich derart vorgegeben, dass Modelldatensätze bei einer Darstellung des Ultraschalldatensatzes und der Modelldatensätze als Vektoren gleicher Dimension durch eine Summe aus einem mittleren Vektor und einer Linearkombination von wenigstens fünf, vorzugsweise zehn, vorgegebenen Teilbereichsvektoren darstellbar sind. Entsprechend kann bei der Vorrichtung vorzugsweise der Teilbereich derart vorgegeben sein, dass Modelldatensätze bei einer Darstellung des Ultraschalldatensatzes und der Modelldatensätze als Vektoren gleicher Dimension durch eine Summe aus einem mittleren Vektor und einer Linearkombination von wenigstens fünf, vorzugsweise zehn, vorgegebenen Teilbereichsvektoren darstellbar sind. Bei dieser Darstellung entsprechen gleiche Komponenten des Vektors für den Ultraschalldatensatz und den Modelldatensatz jeweils dem gleichen Ort. Weiter sind die Teilbereichsvektoren linear unabhängig. Diese Ausführungsform hat unter anderem den Vorteil, dass für Abweichungskriterien wie die Länge bzw. Norm der Differenz der dem Ultraschalldatensatz bzw. dem Modelldatensatz entsprechenden Vektoren, der Abweichungsdatensatz mit minimaler Abweichung einfach ohne die Ausführung von numerischen Minimierungsverfahren ermittelt werden kann.

Vorzugsweise sind die Teilbereichsvektoren so gewählt, dass sie orthogonal zueinander sind.

Weiter sind vorzugsweise der mittlere Vektor und die Teilbereichsvektoren durch Analyse von Referenzultraschalldatensätzen für vorgegebene Referenzwertdokumente des vorgegebenen Wertdokumenttyps ohne Irregularitäten des wenigstens einen vorgegebenen Typs, d. h. vorzugsweise je nach dem wenigstens einem vorgegebenen Typ ohne Anhaftungen bzw. Falten und Materialabträgen, erhältlich oder vorzugsweise erhalten. Als Referenzwertdokument des vorgegebenen Wertdokumenttyps werden vorzugsweise Referenzwertdokumente unterschiedlichen Zustands, beispielsweise druckfrische und benutzte, vorzugsweise mehrfach umgelaufene, Wertdokumente verwendet.

Besonders bevorzugt umfasst die Analyse eine Hauptkomponentenanalyse, wobei der bei der Hauptkomponentenanalyse ermittelte Mittelwert dem mittleren Vektor und die bei der Hauptkomponentenanalyse ermittelten Hauptkomponenten den Teilbereichsvektoren entsprechen. Auf diese Weise kann einfach und systematisch ein Modell erhalten werden, das die wichtigsten Schwankungen der ortsabhängigen Ultraschalleigenschaft beschreibt, aber vergleichsweise einfach bleibt. Die Anzahl der verwendeten Teilbereichsvektoren bzw. Hauptkomponenten kann der Fachmann in Abhängigkeit von den Eigenschaften der Wertdokumente des vorgegebenen Wertdokumenttyps, den zur Durchführung des Verfahrens zur Verfügung stehenden Ressourcen und der notwendigen Ausführungsgeschwindigkeit wählen.

Weiter ist es bevorzugt, dass das Modell eine statistische Modellverteilung aufweist, die eine Wahrscheinlichkeit für die Modelldatensätze beschreibt. Insbesondere kann im Fall der Verwendung der Hauptkomponentenanalyse die statistische Modellverteilung einer sich nach der Hauptkomponentenanalyse ermittelten Verteilung für die Hauptkomponenten entsprechen. Unter der Verteilung wird dabei die Wahrscheinlichkeitsdichte verstanden. Diese kann gegebenenfalls in dem folgenden Verfahrensschritt verwendet werden.

Die Prüfung, ob ein Hinweis auf eine Irregularität des wenigstens einen vorgegebenen Typs, vorzugsweise einer Irregularität in Form wenigstens einer Anhaftung, vorzugsweise eines Klebestreifens, und/oder wenigstens einer Falte und/oder wenigstens eine Irregularität in Form wenigstens eines Materialabtrags, auf dem Wertdokument vorliegt, kann grundsätzlich beliebig, aber in geeigneter Weise unter Verwendung des Abweichungsdatensatzes durchgeführt werden. Bei der Prüfung können Parameter verwendet werden, die durch Prüfung von Trainingswertdokumenten des vorgegebenen Wertdokumenttyps ohne Irregularitäten des wenigstens einen vorgegebenen Typs, vorzugsweise in Form wenigstens einer Anhaftung, beispielsweise eines Klebestreifens, und/oder wenigstens einer Falten und/oder ohne Irregularitäten in Form wenigstens eines Materialabtrags, und solche mit solchen Irregularitäten des wenigstens einen vorgegebenen Typs bzw. die Verwendung der für solche Trainingswertdokumente erfassten Trainingsultraschalldatensätze gewinnen lassen.

Vorzugsweise wird jedoch für den Abweichungsdatensatz unter Verwendung des Abweichungsdatensatzes wenigstens ein Merkmal ermittelt, und beim Prüfen, ob ein Hinweis auf eine Irregularität des wenigstens einen vorgegebenen Typs, vorzugsweise eine Irregularität in Form wenigstens einer Anhaftung, vorzugsweise eines Klebestreifens, und/oder wenigstens einer Falte und/oder eine Irregularität in Form wenigstens eines Materialabtrags auf dem Wertdokument, vorliegt, das wenigstens eine Merkmale verwendet. Das wenigstens eine Merkmal ist ein Merkmal, das durch eine Merkmalsfunktion wenigstens einiger Daten des Abweichungsdatensatzes darstellbar ist, so dass die Merkmalsfunktion bei einer Irregularität des wenigstens einen vorgegebenen Typs, vorzugweise einer Irregularität in Form einer Anhaftung, vorzugsweise eines Klebestreifens, und/oder einer Falte und/oder einer Irregularität in Form eines Materialabtrags, einen signifikanten Wert annimmt. Vorzugsweise werden mehrere verschiedene solcher Merkmale ermittelt und bei dem Prüfen verwendet.

Die Wahl der Merkmale ist nur durch die Eignung zum Prüfen eingeschränkt. Insbesondere können vorzugsweise folgende Alternativen verwendet werden.

Gemäß einer bevorzugten Alternative kann das Merkmal oder eines der Merkmale die Wahrscheinlichkeit dafür betreffen oder beschreiben, dass der erfasste Ultraschalldatensatz oder der Abweichungsdatensatz oder der dem Abweichungsdatensatz entsprechende Modelldatensatz gemäß dem Modell auftritt. In den beiden ersten Fällen entspricht die Wahrscheinlichkeit der Wahrscheinlichkeit, dass der Ultraschalldatensatz einem Wertdokument des vorgegebenen Wertdokumenttyps ohne Irregularitäten des wenigstens einen vorgegebenen Typs, vorzugsweise je nach dem wenigstens einem vorgegebenen Typ ohne Irregularitäten in Form von wenigstens einer Anhaftung oder Falte oder ohne Irregularitäten in Form wenigstens eines Materialabtrags entspricht; im letzten Fall, bei Verwendung der Wahrscheinlichkeit des Modelldatensatzes, kann die Wahrscheinlichkeit der Wahrscheinlichkeit dafür entsprechen, dass der Ultraschalldatensatz unter der Bedingung auftritt, dass das Wertdokument keine Irregularität des wenigstens einen vorgegebenen Typs, vorzugsweise je nach dem wenigstens einem vorgegebenen Typ keine Irregularität in Form wenigstens einer Anhaftung, beispielsweise eines Klebestreifens, oder einer Falte bzw. keine Irregularität in Form wenigstens eines Materialabtrags aufweist.

Gemäß einer weiteren bevorzugten Alternative kann das Merkmal oder eines der Merkmale die Größe der durch den Abweichungsdatensatz beschriebenen Abweichung beschreiben oder darstellen. Unter der Größe wird hierbei die Gesamtgröße der Abweichung, gegebenenfalls normiert auf beispielsweise die Anzahl der Ultraschalldaten der Ultraschalldatensätze, verstanden. Bei einer Darstellung als Vektor kann beispielsweise die Norm bzw. Länge oder eine Funktion dieser Größen als Maß für die Größe verwendet werden.

Gemäß einer anderen bevorzugten Alternative kann das Merkmal oder eines der Merkmale ein Maß für die Stärke der Abweichungen an denjenigen Orten darstellen, an denen die Abweichungsdaten des Abweichungsdatensatzes auf eine Irregularität des wenigstens einen vorgegebenen Typs, vorzugsweise je nach dem wenigstens einem vorgegebenen Typ entweder in Form wenigstens einer Anhaftung und/oder einer Falte oder auf eine Irregularität in Form wenigstens eines Materialabtrags, hinweisen. Die Stärke der Abweichungen kann beispielsweise gegeben sein durch den Mittelwert und/oder die Varianz der Abweichungen, die auf die genannte Irregularität hinweisen. Die Stärke wird für das Merkmal in Abhängigkeit von dem wenigstens einen vorgegebenen Typ, vorzugsweise entweder für Irregularitäten in Form wenigstens einer Anhaftung und/oder einer Falte oder für Irregularitäten in Form wenigstens eines Materialabtrags, ermittelt, da die entsprechenden Abweichungsdaten unterschiedliches Vorzeichen aufweisen können. So reduziert eine Anhaftung typischerweise die Ultraschalltransmission, so dass, je nach Darstellung des Abweichungsdatensatzes, die durch den Modelldatensatz gegebene Abweichung bzw. das Abweichungsdatum für einen Ort mit Anhaftung kleiner sein wird als die entsprechende erfasste Ultraschalltransmission für denselben Ort; das Abweichungsdatum für den Ort ist dann kleiner als Null. Entsprechendes gilt für Falten. Bei einem Materialabtrag dagegen sind die Verhältnisse umgekehrt, es ergibt sich das umgekehrte Vorzeichen für das Abweichungsdatum.

Gemäß noch einer bevorzugten Alternative kann das Merkmal oder eines der Merkmale ein Maß dafür betreffen oder darstellen oder beschreibt, dass Orte, für die die Abweichungsdaten des Abweichungsdatensatzes auf eine Irregularität des wenigstens einen vorgegebenen Typs, vorzugsweise eine Irregularität in Form entweder wenigstens einer Anhaftung und/oder einer Falte oder auf eine Irregularität wenigstens eines Materialabtrags, hinweisen, räumlich gehäuft, vorzugsweise benachbart, auftreten, und dass vorzugsweise bei der Ermittlung des Maßes auch die Größen der Abweichungen berücksichtigt werden. Insbesondere kann das Maß von einer Energiefunktion abhängen. Unter einer Energiefunktion wird dabei vorzugsweise eine Funktion verstanden, die eine Summe von Beiträgen umfasst, die jeweils Produkte von Abweichungsdaten an verschiedenen Orten, gewichtet mit einem vom Abstand der Orte abhängigen Gewichtungsfaktor enthalten; dabei werden vorzugsweise nur Abweichungsdaten berücksichtigt, die auf eine Irregularität des wenigstens einen vorgegebenen Typs, vorzugsweise eine Irregularität in Form entweder wenigstens einer Anhaftung, vorzugsweise eines Klebestreifens, und/oder einer Falte oder auf eine Irregularität in Form eines Materialabtrags, hinweisen. Auf diese Weise kann berücksichtigt werden, ob die Abweichungen nur vereinzelt verstreut vorliegen und daher eher auf Messfehler hindeuten oder ob die Abweichungen flächig verteilt sind, wie es für Irregularitäten des wenigstens einen vorgegebenen Typs, vorzugsweise Irregularitäten in Form von Anhaftungen und/oder Falten oder Materialabträgen, zu erwarten ist.

Noch eine weitere bevorzugte Alternative betrifft insbesondere den Fall, dass die Irregularitäten des wenigstens einen vorgegebenen Typs, beispielsweise Irregularitäten in Form von Anhaftungen und/oder Falten oder von Materialabträgen typischerweise eine vorgegebenen Form aufweisen, beispielsweise im Fall von Klebestreifen streifenförmig und gerade sind. Bei dem Verfahren kann vorzugsweise das Merkmal oder eines der Merkmale ein Maß für das Vorliegen von Abweichungen an Orten, für die die Abweichungsdaten des Abweichungsdatensatzes auf eine Irregularität des wenigstens einen vorgegebenen Typs, beispielsweise eine Irregularität in Form einer Anhaftung und/oder Falte oder auf eine Irregularität in Form eines Materialabtrags hinweisen, entlang einer Linie einer vorgegebenen Form, vorzugsweise einer Geraden, betreffen oder darstellen. Vorzugsweise kann zur Ermittlung des Merkmals eine Hough-Transformation oder eine Fast-Hough-Transformation oder eine Modifikation einer dieser Transformationen für die Abweichungsdaten des Abweichungsdatensatzes durchgeführt werden, die Orten entsprechen, für die die Abweichungsdaten des Abweichungsdatensatzes auf eine Irregularität des wenigstens einen vorgegebenen Typs, beispielsweise eine Irregularität in Form einer Anhaftung und/oder Falte oder auf eine Irregularität in Form eines Materialabtrags, hinweisen. Diese Alternative erlaubt eine besonders klare Erkennung von Klebestreifen, die meist geradlinig aufgeklebt sind.

Noch eine weitere bevorzugte Alternative sieht vor, dass für Abweichungsdaten, die auf eine Irregularität des wenigstens einen vorgegebenen Typs, beispielsweise eine Irregularität in Form einer Anhaftung und/oder einer Falte bzw. eines Materialabtrags, hinweisen, eine Blob-Analyse durchgeführt wird und eine Eigenschaft der ermittelten Blobs bzw. diesen entsprechenden Gebiete, vorzugsweise die Anzahl der Orte darin, besonders bevorzugt nur die Anzahl der Orte in dem größten Blob bzw. diesem entsprechenden Gebiet, als Merkmal verwendet wird. Ein Blob bezeichnet dabei eine Menge von Orten, die ein zusammenhängendes Gebiet bilden und deren Abweichungsdaten auf eine Irregularität des wenigstens einen vorgegebenen Typs, beispielsweise eine Irregularität in Form einer Anhaftung und/oder Falte bzw. auf eine Irregularität in Form eines Materialabtrags hinweisen.

In einer besonders bevorzugten Weiterbildung kann als Merkmal ein Maß dafür ermittelt werden, dass die Orte in den ermittelten Mengen jeweils innerhalb einer die Orte möglichst eng umschließenden Form liegen. Beispielsweise kann das Verhältnis aus der Anzahl der Orte und der durch die Form gegebenen Fläche verwendet werden.

Beim Prüfen, ob ein Hinweis auf eine Irregularität des wenigstens einen vorgegebenen Typs, beispielsweise eine Irregularität in Form wenigstens einer Anhaftung, vorzugsweise eines Klebestreifens, und/oder einer Falte und/oder auf eine Irregularität in Form eines Materialabtrags auf dem Wertdokument vorliegt, kann vorzugsweise eine Klassifikation mittels einer Support-Vektor-Maschine unter Verwendung des wenigstens einen Merkmals oder der Merkmale durchgeführt werden. Dies hat den Vorteil, dass eine treffsicherere Klassifizierung ermöglicht wird.

Es ist dann besonders bevorzugt, dass beim Prüfen eine Wahrscheinlichkeit dafür ermittelt wird, dass für den vorgegebenen Ultraschalldatensatz eine Irregularität des wenigstens einen vorgegebenen Typs, beispielsweise eine Irregularität in Form einer Anhaftung, vorzugsweise eines Klebestreifens, bzw. einer Falte oder eines Materialabtrags, ermittelt wurde. Zur Ermittlung dieser Wahrscheinlichkeit können Parameter verwendet werden, die unter Verwendung von Trainingsultraschalldatensätzen ermittelbar sind, die für Trainingswertdokumente des vorgegebenen Wertdokuments mit Irregularitäten des wenigstens einen vorgegebenen Typs, beispielsweise eine Irregularität in Form wenigstens einer Anhaftung, vorzugsweise eines Klebestreifens, bzw. wenigstens einer Falte oder mit Irregularitäten in Form wenigstens eines Materialabtrags, und für Trainingswertdokumente des vorgegebenen Wertdokumenttyps ohne Irregularitäten des wenigstens einen vorgegebenen Typs, vorzugsweise je nach dem wenigstens einem vorgegebenen Typ Irregularitäten in Form wenigstens einer Anhaftung, vorzugsweise eines Klebestreifens, bzw. wenigstens einer Falte bzw. wenigstens eines Materialabtrags erfasst wurden.

Die zuvor geschilderten Ausführungsformen gelten, auch wenn sie nur im Zusammenhang mit dem Verfahren beschrieben sind, nicht nur für das Verfahren, sondern entsprechend für die Vorrichtung bzw. das Computerprogramm.

Gegenstand der Erfindung ist weiterhin eine Vorrichtung zur Bearbeitung von Wertdokumenten mit einer Zuführeinrichtung zum Zuführen von Wertdokumenten, einer Ausgabeeinrichtung zur Aufnahme bearbeiteter, d. h. sortierter Wertdokumente, und einer Transporteinrichtung zum Transportieren von vereinzelten Wertdokumenten von der Zuführeinrichtung zu der Ausgabeeinrichtung. Die Vorrichtung umfasst weiter eine erfindungsgemäße Vorrichtung zum Prüfen der transportierten Wertdokumente.

Zur Ermittlung der bei dem Prüfen verwendeten Parameter ist meist eine große Zahl von Trainingsultraschalldatensäten für Wertdokumente des vorgegebenen Typs mit einer Irregularität des wenigstens einen vorgegebenen Typs, vorzugsweise einer Irregularität in Form einer Anhaftung und/oder einer Falte oder eines Materialabtrags notwendig. Solche stehen aber nicht immer zur Verfügung und müssen gegebenenfalls präpariert werden.

Gegenstand der Erfindung ist daher auch ein Verfahren zum Erzeugen von Trainingsultraschalldaten zum Anpassung von Parametern eines erfindungsgemäßen Verfahrens zum Prüfen eines Wertdokumentes eines vorgegebenen Wertdokumenttyps auf das Vorhandensein wenigstens einer Irregularität wenigstens eines vorgegebenen Typs, vorzugsweise einer Irregularität in Form wenigstens einer Anhaftung, vorzugsweise eines Klebestreifens, und/oder wenigstens einer Falte und/oder wenigstens einer Irregularität in Form wenigstens eines Materialabtrags, bei dem für vorgegebene Referenzwertdokumente des vorgegebenen Wertdokumenttyps Ultraschalldatensätze erfasst werden, die jeweils ortsaufgelöst wenigstens eine Ultraschalleigenschaft, vorzugsweise die Ultraschalltransmission, des jeweiligen Referenzwertdokuments beschreiben, wobei die vorgegebenen Referenzwertdokumente eine Irregularität des wenigstens einen vorgegebenen Typs, vorzugsweise je nach dem wenigstens einem vorgegebenen Typ eine Irregularität in Form wenigstens einer Anhaftung, vorzugsweise eines Klebestreifens, und/oder wenigstens einer Falte und/oder eine Irregularität in Form wenigstens eines Materialabtrags, nicht aufweisen. Wenigstens einige der Ultraschalldatensätze werden als Trainingsultraschalldatensätze gespeichert. Weiter werden aus wenigstens einigen der Ultraschalldatensätze, die in den bereits gespeicherten Trainingsultraschalldatensätzen wenigstens teilweise enthalten sein können oder nicht, weitere Trainingsultraschalldatensätze erzeugt, indem für jeweils gegebene Orte die Ultraschalldaten des Ultraschalldatensatzes so geändert werden, dass die Änderung einer gegebenen Irregularität des vorgegebenen Typs, beispielsweise einer gegebenen Anhaftung oder Falte bzw. einem gegebenen Materialabtrag, entspricht. Diese weiteren Trainingsultraschalldatensätze werden ebenfalls gespeichert. Vorzugsweise werden die Parameter des Prüfverfahrens unter Verwendung der Trainingsultraschalldatensätze angepasst.

Zur Erfassung der Ultraschalldatensätze gelten die Ausführungen zu dem Prüfverfahren entsprechend auch hier. Dieses Vorgehen hat den großen Vorteil, dass eine sehr große Anzahl von Trainingsultraschalldatensätzen einfach ohne großen Aufwand erzeugt werden kann. Die Änderung kann einfach mittels einer Datenverarbeitungseinrichtung ausgeführt werden.

Dabei ist es bevorzugt, dass bei der Erzeugung eines der weiteren Trainingsultraschalldatensätze jeweils die Orte so gegeben sind, dass die Form und/oder Lage der Irregularität des vorgegebenen Typs, beispielsweise der Anhaftung bzw. Falte bzw. des Materialabtrags, aus einer vorgegebenen Menge möglicher Formen bzw. Lagen ausgewählt sind. Insbesondere können die Lagen und gegebenenfalls auch die Formen zufällig innerhalb des vorgegebenen Bereichs gewählt werden.

Weiter ist es bevorzugt, dass bei der Erzeugung eines der weiteren Trainingsultraschalldatensätze bzw. des einen der weiteren Trainingsultraschalldatensätze die Größe der Änderung durch die Irregularität des vorgegebenen Typs, beispielsweise durch die gegebene Anhaftung oder Falte bzw. den gegebenen Materialabtrag, aus einem vorgegebenen Bereich oder einer vorgegebenen Menge ausgewählt ist. Die Menge der Änderungen kann beispielsweise die Änderungen durch Klebestreifen unterschiedlicher vorgegebener Dicken umfassen.

Für die Typen der Irregularität gelten die Ausführungen zu dem Prüfverfahren entsprechend.

Die Erfindung wird im Folgenden noch weiter beispielhaft an Hand der Zeichnungen erläutert. Es zeigen:

Fig. 1    eine schematische Ansicht einer Wertdokumentbearbeitungsvorrichtung in Form einer Banknotensortiervorrichtung,

Fig. 2    eine schematische Darstellung eines Transmissionsultraschallsensors der Vorrichtung in Fig. 1,

Fig. 3    eine schematische Darstellung einer Anordnung von als Ultraschallsendern dienenden Ultraschallwandlern des Transmissionsultraschallsensors in Fig. 2 in einer Ebene parallel zu einer Transportrichtung der Wertdokumente,

Fig. 4    eine schematische Darstellung eines Wertdokuments mit Wasserzeichen, Sicherheitsfaden und einer Anhaftung in Form eines Klebestreifens,

Fig. 5    ein vereinfachtes Ablaufdiagramm einer ersten Ausführungsform eines mittels der Vorrichtung in Fig. 1 durchführbaren Verfahrens zum Prüfen von Wertdokumenten auf das Vorhandensein einer Irregularität in Form einer Anhaftung oder Falte,

Fig. 6    ein vereinfachtes Ablaufdiagramm einer zweiten Ausführungsform eines mittels der Vorrichtung in Fig. 1 durchführbaren Verfahrens zum Prüfen von Wertdokumenten auf das Vorhandensein einer Irregularität in Form einer Anhaftung oder Falte, und

Fig. 7    ein vereinfachtes Ablaufdiagramm einer dritten Ausführungsform eines mittels der Vorrichtung in Fig. 1 durchführbaren Verfahrens zum Prüfen von Wertdokumenten auf das Vorhandensein einer Irregularität in Form einer Anhaftung oder Falte.

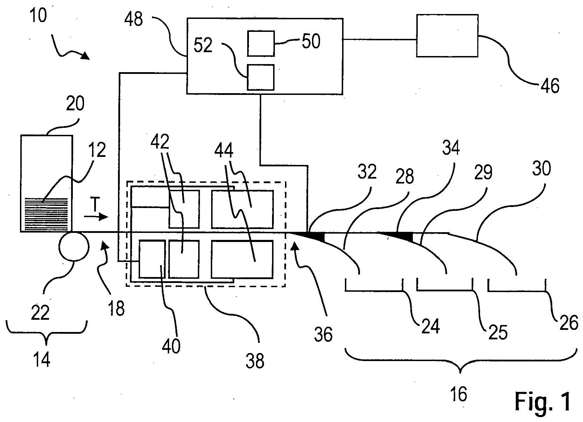

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit und des Zustands von bearbeiteten Wertdokumenten ausgebildet. Die im Folgenden beschriebenen Komponenten der Vorrichtung sind in einem nicht gezeigten Gehäuse der Vorrichtung angeordnet oder an diesem gehalten, soweit sie nicht als extern bezeichnet sind.

Die Vorrichtung verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzeler 22 zum Vereinzeln von Wertdokumenten aus dem Wertdokumentstapel in dem Eingabefach 20 und zum Zuführen der vereinzelten Wertdokumente zu der Transporteinrichtung 18.

Die Ausgabeeinrichtung 16 weist im Beispiel drei Ausgabeabschnitte 24, 25 und 26 auf, in die bearbeitete Wertdokumente sortiert nach dem Ergebnis der Bearbeitung sortiert werden können. Im Beispiel umfasst jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente misst und die Messergebnisse wiedergebende Sensorsignale bildet. In diesem Beispiel verfügt die Sensoreinrichtung 38 über drei Sensoren, nämlich einen optischen Remissionssensor 40, der ein Remissionsfarbbild und ein Remissions-IR-Bild des Wertdokuments erfasst, einen optischen Transmissionssensor 42, der ein Transmissionsfarbbild und ein Transmissions-IR-Bild des Wertdokuments erfasst, und einen Transmissionsultraschallsensor 44, der ortsaufgelöst als Ultraschalleigenschaft die Ultraschalltransmission des Wertdokuments erfasst bzw. misst und im Folgenden der Einfachheit halber nur als Ultraschallsensor bezeichnet wird. Die von den Sensoren gebildeten Sensorsignale entsprechen Messdaten bzw. Rohdaten der Sensoren, die je nach Sensor bereits einer Korrektur, beispielsweise in Abhängigkeit von Kalibrierdaten und/oder Rauscheigenschaften, unterzogen worden sein können.

Zur Erfassung und Anzeige von Bedienungsdaten verfügt die Wertdokumentbearbeitungsvorrichtung 10 über eine Ein-/Ausgabeeinrichtung 46. Die Ein-/ Ausgabeeinrichtung 46 ist im Beispiel durch eine berührungsempfindliche Anzeigeeinrichtung ("touch screen") realisiert. In anderen Ausführungsbeispielen kann sie beispielsweise eine Tastatur und eine Anzeigeeinrichtung, beispielsweise eine LCD-Anzeige umfassen.

Eine Steuer- und Auswerteeinrichtung 48 ist über Signalverbindungen mit der Sensoreinrichtung 38, der Ein-/ Ausgabeeinrichtung 46 und der Transporteinrichtung 18, insbesondere den Weichen 32 und 34, verbunden.

Die Steuer- und Auswerteeinrichtung 48 bildet eine Datenverarbeitungseinrichtung und verfügt neben entsprechenden in den Figuren nicht gezeigten Datenschnittstellen für die Sensoreinrichtung 38 bzw. deren Sensoren über einen Prozessor 50 und einen mit dem Prozessor 50 verbundenen Speicher 52, in dem wenigstens ein Computerprogramm mit Programmcode gespeichert ist, bei dessen Ausführung die Steuer- und Auswerteeinrichtung 48 bzw. der Prozessor 50 die Vorrichtung entsprechend den Eigenschaften der Wertdokumente steuert. So kann sie in ihrer Funktion als Auswerteeinrichtung die Sensorsignale, insbesondere zur Ermittlung einer Echtheitsklasse und/oder einer Zustandsklasse eines bearbeiteten Wertdokuments, auswerten; in ihrer Funktion als Steuereinrichtung kann sie entsprechend der Auswertung die Transporteinrichtung 18 ansteuern und optional die Messdaten speichern. In anderen Ausführungsbeispielen kann auch eine von der Steuereinrichtung getrennte Auswerteeinrichtung vorgesehen sein, die über Schnittstellen mit den Sensoren der Sensoreinrichtung 38 einerseits und der Steuereinrichtung andererseits verbunden ist. Die Auswerteeinrichtung ist dann zur Auswertung der Sensorsignale ausgebildet und liefert das jeweilige Ergebnis an die Steuereinrichtung, die die Transporteinrichtung ansteuert. Die im Folgenden geschilderten Auswertevorgänge können dann allein von der Auswerteeinrichtung durchgeführt werden.

Weiter steuert die Steuer- und Auswerteeinrichtung 48 die Ein-/Ausgabeeinrichtung 46, unter anderem zur Anzeige von Bedienungsdaten, an und erfasst über diese Bedienungsdaten, die Eingaben eines Bedieners entsprechen.

Im Betrieb werden Wertdokumente aus der Zuführeinrichtung vereinzelt und an der Sensoreinrichtung 38 vorbei bzw. durch diese hindurch transportiert. Die Sensoreinrichtung 38 erfasst bzw. misst physikalische Eigenschaften des jeweils an ihr vorbei bzw. durch sie hindurch transportierten Wertdokuments und bildet Sensorsignale bzw. Messdaten, die die Messwerte für die physikalischen Eigenschaften beschreiben. Die Steuer- und Auswerteeinrichtung 48 klassifiziert in Abhängigkeit von den Sensorsignalen der Sensoreinrichtung 38 für ein Wertdokument und von in der Auswerteeinrichtung gespeicherten Klassifizierungsparametern das Wertdokument in eine von vorgegebenen Echtheits- und/oder Zustandsklassen und steuert durch Abgabe von Stellsignalen die Transporteinrichtung 18, hier genauer die Weichen 32 bzw. 34 so an, dass das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium.

Im Folgenden werden Aspekte der Bildung und Verwendung der Ultraschallmessdaten näher beschrieben.

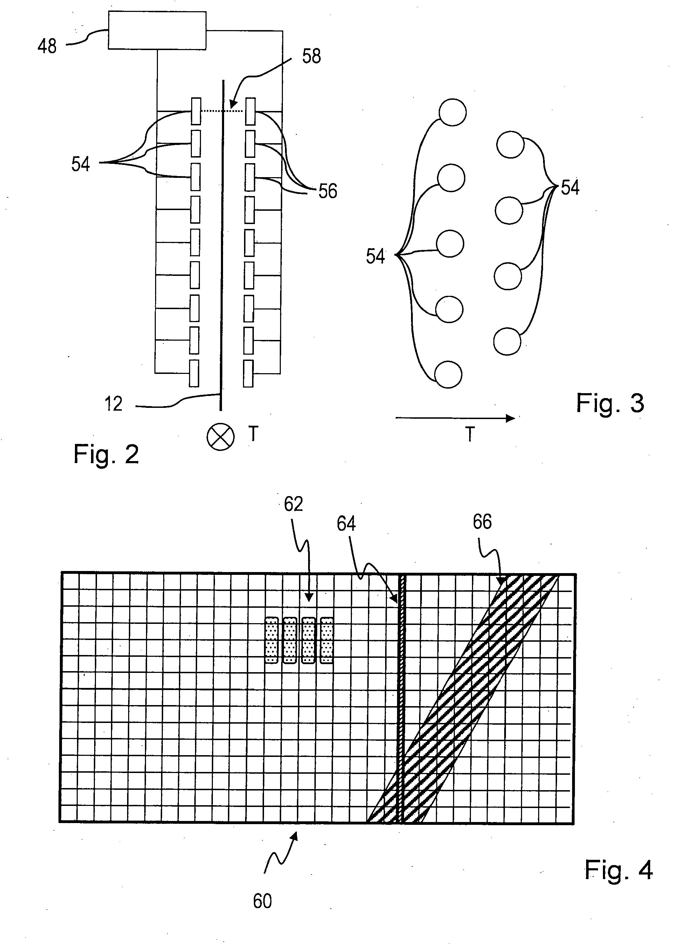

Zur ortsaufgelösten Erfassung der Ultraschalleigenschaft, im Beispiel der Ultraschalltransmission, dient der Transmissionsultraschallsensor 44, der im Beispiel folgendermaßen aufgebaut ist (vgl. Fig. 2 und 3).

Der Ultraschallsensor 44 verfügt über mehrere, sowohl quer zu einer Transportrichtung T der Wertdokumente 12 als auch parallel zu dieser im Wesentlichen in einer Ebene parallel zu einer entlang des Transportpfads 36 des transportierten Wertdokuments 12 angeordnete, von der Steuer- und Auswerteeinrichtung 48 angesteuerte Ultraschallwandler 54 zur Abgabe von Ultraschallpulsen auf das Wertdokument. Diese Ultraschallwandler 54 dienen somit als Ultraschallsender.

Den Ultraschallwandlern bzw. -sendern 54 in Bezug auf den Transportpfad 36 gegenüber sind in gleicher Zahl als Ultraschallempfänger dienende Ultraschallwandler 56 so angeordnet, dass diese von einem entlang des Transportpfads 36 transportierten Wertdokument 12 ausgehenden, durch Beschallung mit Ultraschallpulsen der Ultraschallsender 54 hervorgerufene Ultraschallwellen empfangen können. Die Ultraschallwandler 56 sind mit der Steuer- und Auswerteeinrichtung 48 über in den Figuren nicht gezeigte Schnittstellen und schematisch gezeigte Signalverbindungen verbunden.

Jedem der Ultraschallsender 54 ist dabei einer der Ultraschallempfänger 56 so zugeordnet, dass sich zwischen diesen eine wenigstens näherungsweise orthogonal zu einem entlang des Transportpfads 36 transportierten Wertdokument 12 verlaufende Ultraschallstrecke 58 ergibt, entlang derer ein von dem jeweiligen Ultraschallsender 54 abgegebener Ultraschallpuls zu dem diesem zugeordneten Ultraschallempfänger 56 läuft. Mit jedem Paar von Ultraschallsendern und diesen zugeordneten Ultraschallempfängern bzw. mit jeder Ultraschallstrecke 58 in Verbindung mit der Steuer- und Auswerteeinrichtung 48 ist damit ein Wert für die Ultraschalltransmission des Wertdokuments 12 an dem mit dem Ultraschall beschallten Ort ermittelbar.

Die Ultraschallwandler 54 bzw. 56 sind so ausgebildet, dass sie zur Abgabe bzw. zum Empfang von Ultraschallpulsen mit einer Dauer im Bereich von im Beispiel etwa 30 μs und einer Ultraschallfrequenz, d.h. einem Frequenzmaximum des Spektrums des Ultraschallpulses, von im Beispiel etwa 400 kHz gut geeignet sind. Weiter sind sie so dimensioniert, dass jeweils ein auf einem entlang des Transportpfads 36 transportierten Wertdokument 12 bei Beschallung mit den Ultraschallpulsen beschallter Fleck, d.h. Abtastbereich, einen Durchmesser von etwa 2 mm aufweist. Jedem der Abtastbereiche ist als Ort der Mittelpunkt des Abtastbereiches zugeordnet.

Die Ultraschallsender 54 und die diesen jeweils zugeordneten Ultraschallwandler 56 sind im Beispiel in zwei quer zur Transportrichtung verlaufenden Zeilen versetzt angeordnet. Die Ultraschallwandler einer jeweiligen Zeile sind in gleichen Abständen zueinander angeordnet und werden gleichzeitig betrieben. Die Ultraschallwandler sind jedoch in den Zeilen so angeordnet, dass die Ultraschallwandler der einen der Zeilen quer zur Transportrichtung versetzt gegenüber den Ultraschallwandlern der anderen der Zeilen sind.

Die Ultraschallwandler aller Zeilen werden synchron gepulst betrieben. Wenn ein Wertdokument 12 mit konstanter, geeignet vorgegebener Geschwindigkeit durch die Ultraschallstrecken 58 transportiert wird, werden während des Transports daher in vorgegebenen Zeitabständen Ultraschalltransmissionswerte erfasst. In diesem Ausführungsbeispiel erfolgt die Ansteuerung unabhängig von dem Eintritt eines Wertdokuments 12 in den Erfassungsbereich des Transmissionsultraschallsensors 44. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Durch den Versatz der Ultraschallwandler der Zeilen zueinander und den abwechselnden Betrieb ergibt sich eine regelmäßige Anordnung von Abtastbereichen bzw. Orten auf dem Wertdokument 12, im Beispiel eine Anordnung auf einem Rechteckgitter, das in Fig. 4 beispielhaft schematisch gezeigt ist. Die Anordnung der Ultraschallsender und -empfänger 54 bzw. 56 ist so gewählt, dass der Abstand aufeinander folgender Orte in Transportrichtung T kleiner als 1 cm, vorzugsweise kleiner als 5 mm ist. Im Beispiel beträgt der Abstand nächstbenachbarter Orte etwa 3 mm, vorzugsweise 2 mm.

Der Ultraschallsensor 44 verfügt im Ausführungsbeispiel insbesondere über vierundzwanzig Ultraschallsender /-empfänger-Paare bzw. Ultraschallstrecken 58, die so angeordnet sind, dass die entsprechenden Ort einen Abstand zwischen 3 und 4 mm aufweisen.

Zur Erfassung der Transmissionswerte, d. h. der Transmission, erfasst die Steuer- und Auswerteeinrichtung 48 in konstanten Zeitabständen die Sensorsignale der Ultraschallempfänger 56, die die Intensität bzw. Leistung einzelner empfangender Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 48 auch das Eintreten eines Wertdokuments in den Erfassungsbereich des Transmissionsultraschallsensors 44. Die Transmissionswerte sind dabei unter der Annahme einer grundsätzlich konstanten Sendeleistung der Ultraschallsender 54 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionswerte zu erhalten.

Die ermittelten Ultraschalltransmissionswerte werden den Orten, für die sie erfasst wurden, zugeordnet gespeichert und bilden einen Ultraschalldatensatz für das Wertdokument. Die Speicherung kann beispielsweise in der Art erfolgen, dass jeweils bei Betrieb der Ultraschallwandler einer der Zeilen die Ultraschalltransmissionswerte für die Ultraschallwandler der jeweiligen Zeile in einer vorgegebenen Reihenfolge nacheinander gespeichert werden, wobei entsprechend dem abwechselnden Betrieb der Ultraschallwandler der Zeilen die Ultraschalltransmissionswerte von Ultraschallwandlern der jeweils betriebenen Zeile in dem Speicher 50 nach den Ultraschalltransmissionswerten von Ultraschallwandlern der jeweils zuvor betriebenen Zeile gespeichert werden. Insbesondere können die Ultraschalltransmissionswerte als Vektor gespeichert werden, dessen Index den Ort, für den ein jeweiliger Ultraschalltransmissionswert erfasst wurde, angibt. Der Index, der die Position in dem Vektor angibt, stellt dann zusammen mit der Vorschrift für die Umsetzung von Orten bzw. Ortskoordinaten in Indexwerte die Ortsinformation dar. Im vorliegenden Ausführungsbeispiel werden für Wertdokumente des vorgegebenen Wertdokumenttyps Ultraschalltransmissionswerte für N Orte auf dem jeweiligen Wertdokument erfasst.

Die Frequenz, mit der die Ultraschallpulse nacheinander abgegeben werden, und die Transportgeschwindigkeit des Wertdokuments sind so gewählt, dass entlang der Transportrichtung des Wertdokuments Ultraschalltransmissionswerte im Abstand von 3 mm, vorzugsweise 2 mm, entlang der Transportrichtung oder fünfzig oder mehr Transmissionswerte erfasst werden.

Im vorliegenden Ausführungsbeispiel eines Verfahrens zur Prüfung von Wertdokumenten eines vorgegebenen Wertdokumenttyps auf das Vorhandenseines wenigstens einer Irregularität in Form wenigstens einer Anhaftung oder einer Falte werden die Ultraschalltransmissionswerte dazu verwendet, ein jeweiliges Wertdokument daraufhin zu prüfen, ob es eine Irregularität in Form einer Anhaftung oder einer Falte aufweist. Es erfolgt also eine Prüfung auf das Vorliegen einer Irregularität wenigstens eines vorgegebenen Typs, wobei die vorgegebenen Typen Anhaftungen und Falten sind. Wird eine solche Anhaftung oder Falte erkannt, wird dem Wertdokument die Zustandsklasse "nicht umlauffähig" zugeordnet. Die Anhaftung ist dabei ein länglicher Klebestreifen, der wenigstens einseitig auf das Wertdokument aufgeklebt ist und an ihm haftet. Dies ist in Fig. 4 veranschaulicht, die ein Wertdokument 60 eines vorgegebenen Wertdokumenttyps mit einem gepunktet dargestellten Wasserzeichen 62, einem Sicherheitsfaden 64 und einem schraffierte gekennzeichneten Klebestreifen 66 zeigt.

Das Wasserzeichen 62, der Sicherheitsfaden 64 und der Klebestreifen 66, aber auch eine Falte führen zu Änderungen der Ultraschalltransmission im Vergleich zu den anderen Bereichen des Wertdokuments, die aus einem Substrat im Wesentlichen konstanter Dicke und Dichte gebildet sind. Insbesondere reduzieren Klebestreifen die Ultraschalltransmission. Das Wasserzeichen hingegen erhöht die Ultraschalltransmission aufgrund des teilweise reduzierten Flächengewichts. Die genaue Lage und Ausbildung des Wasserzeichens 62 und die genaue Lage des Sicherheitsfadens 64 auf dem jeweiligen Wertdokument sind für Wertdokumente des vorgegebenen Wertdokumenttyps nicht genau konstant, sondern können für verschieden Wertdokumente des vorgegebenen Typs im Wesentlichen innerhalb von vorgegebenen Bereichen variieren. Dies kann die Erkennung von Klebestreifen erschweren.

Bei dem Verfahren wird ein Modell für die Ortsabhängigkeit der Ultraschalltransmission der Wertdokumente des vorgegebenen Wertdokuments ohne

Anhaftungen, Falten oder Beschädigungen, beispielsweise Risse oder Löcher, verwendet. Das Modell definiert Modelldatensätze, die innerhalb eines vorgegebenen Teilbereichs eines N-dimensionalen Raumes möglicher Ultraschalldaten liegen. Dabei ist N die Anzahl der Orte, für die die Ultraschalleigenschaft erfasst wurden, und damit die Anzahl der Messergebnisse des Ultraschalldatensatzes. Dieses Modell kann folgendermaßen ermittelt werden: Zunächst werden Referenzwertdokumente des vorgegebenen Wertdokumenttyps ohne Anhaftungen, Falten oder Beschädigungen vorgegeben. Vorzugsweise liegt die Anzahl der Referenzwertdokumente über 100.

Für diese Referenzwertdokumente werden mittels des Transmissionsultraschallsensors 44 Referenzultraschalldatensätze erfasst, die ortsaufgelöst die Ultraschalltransmission der Referenzwertdokumente für Ultraschall des Ultraschallsensors 44 beschreiben.

Dazu kann man die Ultraschalldatensätze als Vektoren auffassen, deren Index den Ort wiedergibt, an dem der Ultraschalltransmissionswert, der dem Index entspricht, erfasst wurde.

Zur Festlegung des Teilbereichs können die Modelldatensätze durch eine Summe aus einem mittleren Vektor und einer Linearkombination von Teilbereichsvektoren dargestellt sein. Es werden nun ein mittlerer Vektor und zueinander orthogonale Einheitsvektoren $e_j$ mit N Komponenten bzw. der Dimension N ermittelt, die die Referenzultraschalldatensätze möglichst gut beschreiben. Die Anzahl K der Einheitsvektoren ist kleiner als N und wird in Abhängigkeit von der zur Verfügung stehenden Rechenkapazität und dem noch akzeptablen Fehler sowie der Anzahl der zur Verfügung stehenden Referenzultraschalldatensätze gewählt. Der Index j nimmt ganzzahlige Werte von 1 bis K an. Die Referenzwertdokumente werden für die folgende Darstellung mit einem Index i bezeichnet, der von 1 bis zur Anzahl M der Referenzwertdokumente läuft.

Im Folgenden bezeichnet $x_i$ den N-dimensionalen Vektor, der den Referenzultraschalldatensatz für das Referenzwertdokument i darstellt; als mittlerer Vektor wird der Mittelwert der $x_i$ über die Referenzwertdokumente verwendet und als N-dimensionaler Vektor m bezeichnet:

$$m = \frac{1}{M} \sum_i x_i$$

Eine Näherung yi für einen Referenzultraschalldatensatz $x_i$, wiederum darstellbar als N-dimensionaler Vektor, wird dann als Summe aus dem mittleren Vektor bzw. Mittelwert m und einer Linearkombination der Einheitsvektoren $e_j$ mit skalaren Koeffizienten $a_{ij}$

$$y_i = m + \sum_{j=1}^{K} a_{ij} e_j$$

dargestellt. Durch geeignete Wahl der Koeffizienten aij und der $e_j$ soll der Fehler E zwischen den Näherungen und den Referenzultraschalldatensätzen

$$E = \sum_{i=1}^{M} \|y_i - x_i\|^2$$

12

minimiert werden, wozu bekannte Optimierungsverfahren mit Lagrange-Multiplikatoren verwendet werden können.

Die Lösung für die Wahl der Einheitsvektoren $e_j$ ist gegeben durch die K normierten Eigenvektoren $v_j$ zu den größten Eigenwerten der Streu- bzw. Kovarianzmatrix $\Sigma$

$$\Sigma = \frac{1}{M-1} \sum_{i=1}^{M} (x_i - m)(x_i - m)^T$$

Das Superskript T bezeichnet dabei den transponierten Vektor bzw. weiter unten in Verbindung mit Matrizen die transponierte Matrix, $x_i$ und m sind Spaltenvektoren. Der Faktor 1/ (M-1) spielt im Folgenden keine Rolle und kann dann auch entfallen.

K ist dabei vorzugsweise so gewählt, dass der Fehler E kleiner als ein vorgegebener Wert ist.

Das so erhaltene Modell definiert daher Modellultraschalldatensätze z, die durch die Summe aus dem Mittelwertvektor m und einer Linearkombination der normierten Eigenvektoren $v_j$ definiert sind:

$$z = m + \sum_{j=1}^{K} s_j v_j$$

wobei $s_j$ skalare Koeffizienten sind. Die Vektoren z sind Vektoren im N-dimensionalen Raum.

Dieses Modell ist also ein Modell für die Ortsabhängigkeit der Ultraschalltransmission von Referenzwertdokumenten des vorgegebenen Wertdokumenttyps ohne Irregularitäten in Form von Klebestreifen oder Falten.

Für einen erfassten Ultraschalldatensatz, der durch den Vektor x dargestellt wird, kann die beste Näherung durch das Modell bzw. die minimale Abweichung von dem Modell bestimmt werden, indem durch Anpassung der Koeffizienten $s_j$ der Fehler zwischen dem Vektor x und den Modelldatensätzen, gegeben durch die Menge der möglichen Vektoren z, minimiert wird. Das vorgegebene Abweichungsmaß für die Abweichung zwischen dem Ultraschalldatensatz und einem Modelldatensatz ist durch die Norm der Differenz zwischen dem Ultraschalldatensatz und dem Modelldatensatz gegeben, wobei die Norm eines Vektors die Wurzel aus der Summe der Quadrate der Vektorkomponenten ist.

Bezeichnet B die Matrix $(v_1,..., v_k)$, so lautet der k-dimensionale Vektor $\hat{s} = (\hat{s}_1, ..., \hat{s}_k)^T$ der Koeffizienten der Linearkombination

$$\hat{s} = B^T(x - m), \qquad (1)$$

d. h. der Modelldatensatz mit der minimalen Abweichung von dem Ultraschalldatensatz x ist gegeben durch

$$z = m + \sum_{j=1}^{K} \hat{s}_j v_j. \qquad (2)$$

Der Abweichungsdatensatz ist gegeben durch den Abweichungsvektor

$$R = x - (m + B\hat{s}) = x - [m + BB^T(x - m)] \qquad (3)$$

Zur Berechnung des Abweichungsdatensatzes sind also nur die Komponenten des Mittelwertvektors m und die der Matrix $B \cdot B^T$ notwendig, die für einen gegebenen Wertdokumenttyp ermittelt und abgespeichert sein müssen.

Zum Prüfen, ob ein Hinweis auf eine Irregularität in Form wenigstens einer Anhaftung, insbesondere eines Klebestreifens, oder wenigstens einer Falte auf dem Wertdokument vorliegt, werden Merkmale in Abhängigkeit von dem Abweichungsdatensatz ermittelt.

Folgende Merkmale werden in diesem Ausführungsbeispiel verwendet:
Das erste Merkmal $M^{(1)}$ betrifft bzw. beschreibt die Größe der durch den Abweichungsdatensatz beschriebenen Abweichung. Genauer ist diesem Ausführungsbeispiel das Merkmal gegeben durch die euklidische oder L2-Norm des den Abweichungsdatensatz darstellenden Vektors

$$M^{(1)} = \|R\|_2.$$

Das zweite Merkmal $M^{(2)}$ stellt ein Maß für die Stärke der Abweichungen an Orten dar, an denen eine aus den Abweichungsdaten des Abweichungsdatensatzes ermittelbare Differenz zwischen Ultraschalltransmission und Modell auf eine Irregularität in Form einer Anhaftung oder Falte hinweist. Da eine Anhaftung oder Falte die Ultraschalltransmission reduziert, ist für einen Ort mit einer Anhaftung oder Falte die Abweichung bzw. das Abweichungsdatum des Abweichungsdatensatzes kleiner als Null. Das Merkmal ist gegeben durch

$$M^{(2)} = \sum_{n=1}^{N} R_n \Theta(-R_n) \, ,$$

wobei $\Theta(t)$ die Heaviside-Funktion ist, d.h. $\Theta(t)=0$ für $t<0$, 1 sonst.

Das dritte Merkmal $M^{(3)}$ stellt ein Maß dafür dar, dass Orte, für die die Abweichungsdaten des Abweichungsdatensatzes auf eine Irregularität in Form einer Anhaftung oder Falte hinweisen, räumlich gehäuft auftreten, wobei das Maß auch die Größen der Abweichungen berücksichtigt. Hier wird eine Energiefunktion verwendet, die eine Summe von Beiträgen umfasst, die jeweils Produkte von Abweichungsdaten an verschiedenen Orten, gewichtet mit einem vom Abstand der Orte abhängigen Gewichtungsfaktor enthalten; dabei werden vorzugsweise nur Abweichungsdaten berücksichtigt, die auf eine Irregularität in Form wenigstens einer Anhaftung, vorzugsweise eines Klebestreifens, oder wenigstens einer Falte hinweisen. Genauer wird die Ising-Energie für Orte mit einer reduzierten Ultraschalltransmission mit einer Wechselwirkung mit den nächsten acht Nachbarn verwendet:

$$M^{(3)} = \sum_{n,m=1,n\neq m}^{N} w_{nm}\, \theta(-R_n)\theta(-R_m)R_n R_m \, ,$$

wobei $w_{nm} = 1$, wenn die n und m entsprechenden Orte nächste Nachbarn sind, $w_{nm} = 1/\sqrt{2}$, wenn die n und m entsprechenden Orte über- bzw. zweitnächste Nachbarn sind, und $w_{nm} = 0$ sonst.

Das vierte Merkmal $M^{(4)}$ stellt ein Maß für das Vorliegen von Abweichungen, die auf eine Irregularität in Form wenigstens einer Anhaftung oder Falte hinweisen, entlang einer Linie einer vorgegebenen Form, im Beispiel einer Geraden, dar. In diesem Ausführungsbeispiel wird dazu eine Hough-Transformation für diejenigen Orte durchgeführt, deren Abweichungsdaten des Abweichungsdatensatzes auf eine Irregularität in Form einer Anhaftung oder Falte hinweisen, hier also negativ sind. Bei der Hough-Transformation zur Erkennung von Geraden werden Parameterpaare, die eine Gerade in dem Raum der Orte definieren, für mögliche Geraden zwischen jeweils zwei der untersuchten Orte ermittelt. Der Bereich möglicher Wertepaare für die Parameterpaare ist in Zellen vorgegebener Größe unterteilt, denen jeweils ein Zähler zugeordnet ist. Fällt ein Parameterpaar in eine der Zellen, wird deren Wert um eins erhöht. Als Merkmal wird nun der maximale Zählerwert, ermittelt unter allen Zellen, normiert mit der Anzahl der bei der Transformation verwendeten Orte verwendet.

Beim Prüfen, ob ein Hinweis auf eine Irregularität in Form wenigstens einer Anhaftung, insbesondere eines Klebestreifens, oder einer Falte auf dem Wertdokument vorliegt, wird eine auf den Merkmalen basierende Klassifikation mittels einer Support-Vektor-Maschine mit nichtlinearer Kern- bzw. Kernelfunktion durchgeführt. Zum Training werden Trainingswertdokumente des vorgegebenen Wertdokumenttyps in vorgegebener Orientierung verwendet, die keine Irregularitäten in Form wenigstens einer Anhaftung, insbesondere eines Klebestreifens, oder einer Falte aufweisen, und solche, die diese bzw. eine dieser Irregularitäten aufweisen. Die Anzahl der Trainingswertdokumente sei L.

Im Folgenden sollen C bzw. $C_1$ einen aus den Merkmalswerten der genannten Merkmale für einen erfassten Ultraschalldatensatz x bzw. einen Referenzultraschalldatensatz $x_1$ gebildeten Vektor bezeichnen, wobei der Index 1 von 1 bis L laufen kann. Dazu wird eine Abstandsfunktion f verwendet, die gegeben ist durch

$$f(C) = \sum_{l=1}^{L} \alpha_l k(C, C_l) + b.$$

Die Entscheidungsfunktion, die die Werte +1 und -1 annehmen kann, ist dann gegeben durch

$$c(C) = sign\big(f(C)\big).$$

Dabei ist die sign(t) eine Funktion, die 1 ist falls t≥0 und -1 sonst. Die Koeffizienten $\alpha_1$ und die Konstante b können durch Lösung eines quadratischen Optimierungsproblems ermittelt werden.

Im vorliegenden Beispiel wird eine Kern- bzw. Kernel-Funktion k mit radialen Basisfunktionen verwendet:

$$k(C, C_l) = exp\big(-\|C - C_l\|^2/(2\sigma^2)\big).$$

Der Parameter $\sigma$ ist hierbei, gegebenenfalls durch Probieren, geeignet zu wählen.

Das Ergebnis der Klassifikation ist binär, d. h. es wird nur ermittelt, ob ein Hinweis auf eine Irregularität in Form eines Klebestreifens oder einer Falte vorliegt (f(C)=1) oder nicht (f(C)=-1).

Die zuvor genannten Werte und Parameter sind in dem Speicher 52 für jeden Wertdokumenttyp gespeichert, der mittels der Vorrichtung 10 geprüft werden kann.

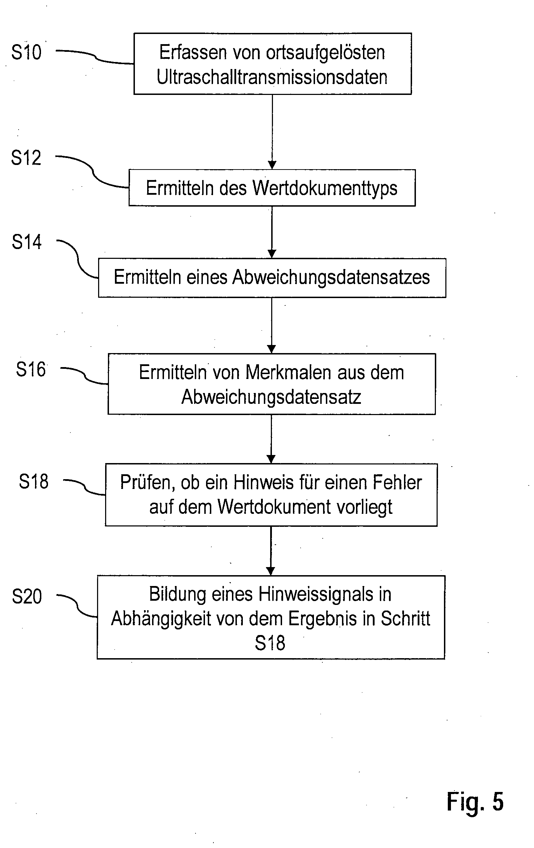

Fig. 5 zeigt ein erstes Ausführungsbeispiel für ein Verfahren zum Prüfen eines Wertdokumentes eines vorgegebenen Wertdokumenttyps auf das Vorhandensein wenigstens einer Irregularität in Form wenigstens einer Anhaftung, hier eines Klebestreifens, oder einer Falte. Zur Durchführung des Verfahrens ist in der Steuer- und Auswerteeinrichtung 48, genauer deren Speicher 52, ein Computerprogramm gespeichert, bei dessen Ausführung die Steuer- und Auswerteeinrichtung 48, genauer der Prozessor 50 die erste Ausführungsform des Verfahrens ausführt.

In Schritt S10 wird mittels des Transmissionsultraschallsensors 44 für ein Wertdokument ein Ultraschalldatensatz erfasst, der ortsaufgelöst eine Ultraschalleigenschaft, in diesem Beispiel die Ultraschalltransmission, des Wertdokuments beschreibt. Der Transmissionsultraschallsensor 44 erfasst, wie zuvor geschildert, die Ultraschalltransmission für Messflecken auf dem Wertdokument und bildet entsprechende Messwerte, die dem Ultraschalldatensatz zugeordnet werden. Der Ultraschalldatensatz entspricht dem Vektor x. Die Messwerte bzw. der Ultraschalldatensatz werden durch die Steuerund Auswerteeinrichtung 48 erfasst.

Danach ermittelt die Auswerteeinrichtung 48 in Schritt S12 auf der Basis eines mittels des optischen Remissionssensors 40 erfassten Bildes des Wertdokuments dessen Wertdokumenttyp und Orientierung.

In Schritt S14 ermittelt die Auswerteeinrichtung 48 den Abweichungsdatensatz, der oben durch den Vektor R dargestellt wird. Dieser beschreibt ortsaufgelöst eine Abweichung zwischen dem Ultraschalldatensatz und dem Modelldatensatz und ist so ermittelt, dass die durch ihn beschriebene Abweichung in Bezug auf das Modell minimal ist. Dazu ist nur die rechte Seite der Gleichung (3) zu berechnen.

In Schritt S16 ermittelt die Auswerteeinrichtung 48 zur Durchführung des Prüfens, ob ein Hinweis auf eine Irregularität in Form wenigstens einer Anhaftung, insbesondere eines Klebestreifens. oder einer Falte auf dem Wertdokument vorliegt, für den Abweichungsdatensatz die Merkmale $M^{(1)}$ bis $M^{(4)}$.

Die berechneten Merkmale verwendet die Auswerteeinrichtung 48 in Schritt S18 dazu, zu prüfen, ob ein Hinweis auf eine Irregularität in Form wenigstens einer Anhaftung, insbesondere eines Klebestreifens, oder einer Falte auf dem Wertdokument vorliegt. Hierzu verwendet sie die zuvor geschildete Support-Vektor-Maschine. Das Ergebnis ist in diesem Ausführungsbeispiel binär, d. h. das Ergebnis lautet +1, falls die Klassifizierung ein Vorliegen eines Klebestreifens oder einer Falte ergeben hat, andernfalls 0. Die Auswerteeinrichtung 48 speichert einen entsprechenden Wert ab.

In Schritt S20 bildet sie dann in Abhängigkeit von dem Ergebnis in Schritt S18 ein Hinweissignal, das angibt, ob das Prüfen das Vorliegen einer Irregularität in Form einer Anhaftung, hier eines Klebestreifens, oder einer Falte ergeben hat oder nicht.

Das Ergebnis bzw. das Hinweissignal verwendet die Steuer- und Auswerteeinrichtung 48, um in Abhängigkeit von den Ergebnissen anderer Prüfungen ein Sortierergebnis zu ermitteln, und die Transporteinrichtung 18, genauer deren Weichen anzusteuern, so dass das Wertdokument in einen dem Sortierergebnis zugeordneten Ausgabeabschnitt transportiert wird.

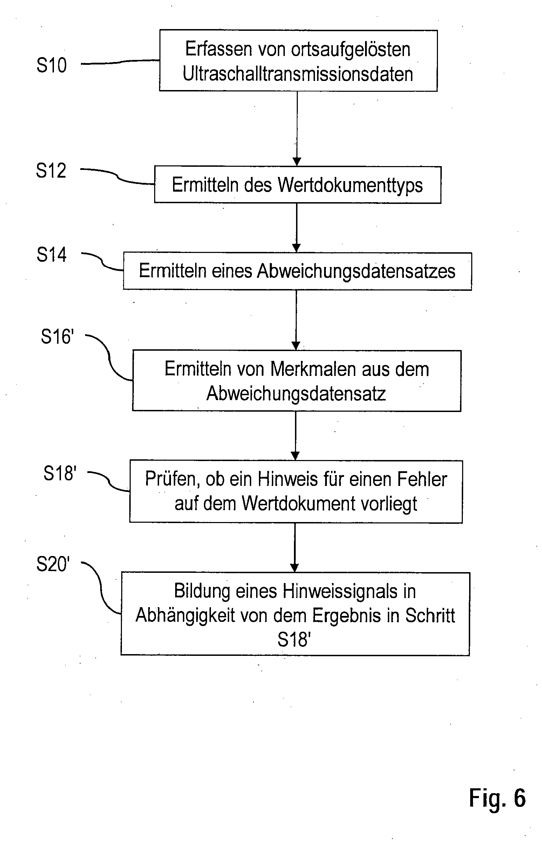

Ein zweites Ausführungsbeispiel in Fig. 6 unterscheidet sich von dem ersten Ausführungsbeispiel in Fig. 5 allein dadurch, dass die Schritte S16 bis S20 durch Schritte S16' bis S20' ersetzt sind. Dementsprechend sind die Steuerund Auswerteeinrichtung und das darin gespeicherte Computerprogramm geändert.

Der Schritt S16' unterscheidet sich von Schritt S16 zum einen dadurch, dass das zweite Merkmal M(2) ersetzt ist durch ein Merkmal M(6). Letzteres beschreibt ebenfalls ein Maß für die Stärke der Abweichungen an Orten, an denen eine aus den Abweichungsdaten des Abweichungsdatensatzes ermittelbare Differenz zwischen Ultraschalltransmission und Modell auf eine Irregularität in Form einer Anhaftung oder Falte hinweist. Das Merkmal ist gegeben durch

$$M^{(6)} = \sum_{n=1}^{N} R_n^2 \Theta(-R_n)$$

Zum anderen unterscheidet sich Schritt S16' von Schritt S16 dadurch, dass ein weiteres Merkmal M(7) verwendet wird, das eine Wahrscheinlichkeit dafür beschreibt, dass der dem Abweichungsdatensatz entsprechende Modelldatensatz gemäß dem Modell auftritt. Der dem Abweichungsdatensatz entsprechende Modelldatensatz ist derjenige Modelldatensatz für den die Abweichung von dem Modell minimal ist.

Hierzu wird in diesem Ausführungsbeispiel davon ausgegangen, dass die Ultraschalldatensätze in hinreichend guter Näherung normalverteilt sind. Als Parameter der Verteilung werden der Mittelwert und die Kovarianzmatrix ermittelt. Dies geschieht analog zum ersten Ausführungsbeispiel, wobei als der Mittelwert der mittlere Vektor m und als die Kovarianzmatrix die zuvor erwähnte Kovarianzmatrix $\Sigma$ ermittelt werden. Durch eine Hauptkomponentenanalyse der Verteilung gelangt man zu dem oben beschriebenen Modell, das ergänzt ist durch die Angabe einer Wahrscheinlichkeit dafür, dass ein Wertdokument des vorgegebenen Wertdokumenttyps ohne eine Irregularität in Form einer Anhaftung, im Beispiel eines Klebestreifens, oder Falte als beste Näherung einen Modellultraschalldatensatz gemäß den Gleichungen (1) und (2) aufweist. Der Logarithmus der Wahrscheinlichkeit für das Auftreten eines Modelldatensatzes

$$z = m + \sum_{j=1}^{K} s_j v_j$$

ist dann gegeben durch

$$log\big(p(s|Fehlerfrei)\big) = \log\left[(2\pi)^{-K/2}|\Sigma_s|^{-1/2}\exp\left(-\frac{1}{2}s^T\Sigma_s^{-1}s\right)\right]$$

mit der Diagonalmatrix

$$\Sigma_s = \begin{pmatrix} \lambda_1 & \dots & 0 \\ \vdots & \ddots & \vdots \\ 0 & \dots & \lambda_K \end{pmatrix}$$

der K größten Eigenwerte der Kovarianzmatrix $\Sigma$. Als Merkmal M(7) wird dann der Logarithmus der Wahrscheinlichkeit für das Auftreten des Modelldatensatzes mit der minimalen Abweichung von dem Ultraschalldatensatz nach den Gleichungen (1) und (2)

$$M^{(7)} = log\big(p(\hat{s}|Fehlerfrei)\big) = \log\left[(2\pi)^{-K/2}|\Sigma_s|^{-1/2}\exp\left(-\frac{1}{2}\hat{s}^T\Sigma_s^{-1}\hat{s}\right)\right]$$

verwendet.

Allein schon wegen der anderen Merkmale ist der Schritt S18 ersetzt durch den Schritt S18'. Die Support-Vektor-Maschine und deren Parameter sind unter Verwendung der Referenzultraschalldatensätze analog zu der Support-Vektor-Maschine des ersten Ausführungsbeispiels ersetzt.

Dementsprechend wird in Schritt S20' ein Hinweissignal gebildet, das den in Schritt S18' erhaltenen Wert darstellt.

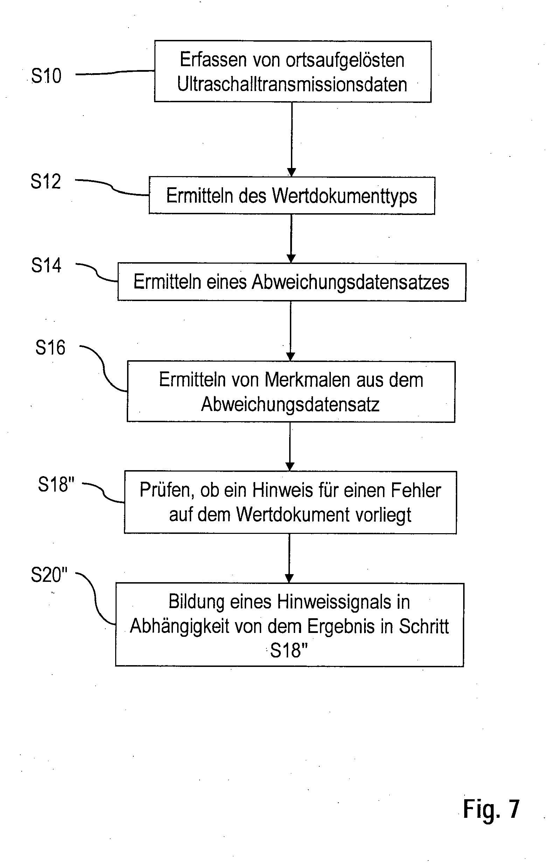

Ein drittes Ausführungsbeispiel, das in Fig. 7 veranschaulicht ist, unterscheidet sich von dem ersten Ausführungsbeispiel dadurch, dass der Schritt S18 und entsprechend der Schritt S20 durch Schritte S18" und S20" ersetzt sind. Genauer ermittelt die entsprechend modifizierte Steuer- und Auswerteeinrichtung 48 in Schritt S18 als Ergebnis nicht ein Klassifizierungsergebnis in Form einer von zwei Klassen; beim Prüfen ermittelt sie als Ergebnis eine Wahrscheinlichkeit dafür, dass für den vorgegebenen Ultraschalldatensatz eine Irregularität in Form einer Anhaftung, vorzugsweise eines Klebestreifens, oder einer Falte ermittelt wurde.

Das ist eine Wahrscheinlichkeit dafür, dass eine bei der Klassifikation unter Verwendung der Support-Vektor-Maschine erhaltene Klasse für den gegebenen Ultraschalldatensatz zutreffend ist, insbesondere beispielweise dass ein Klebestreifen oder eine Falte vorliegt, wenn der Ultraschalldatensatz gegeben ist. Dieser Wert wird, wie im ersten Ausführungsbeispiel, gespeichert.

Hierzu wird im vorliegenden Ausführungsbeispiel folgende Beziehung verwendet (vgl. Platt, John C., "Probabilistic Outputs for Support Vector Machines and Comparisons to Regularized Likelihood Methods", Advances in Large Margin Classifiers, 1999, Seiten 61 bis 74):

$$p(c = 1|x) = \frac{1}{1 + \exp(Af(x) + B)}.$$

Die dazu notwendigen Parameter A und B können wie die Parameter für die Support-Vektor-Maschine ermittelt und in dem Speicher 52 gespeichert sein.

Ein viertes Ausführungsbeispiel unterscheidet sich von dem ersten Ausführungsbeispiel dadurch , dass die möglichen Modelldatensätze durch den Mittelwert gegeben sind. Die dann zu verwendenden Formeln ergeben sich dadurch, dass die Einheitsvektoren weggelassen werden.

Ein fünftes Ausführungsbeispiel unterscheidet sich von den zuvor beschriebenen Ausführungsbeispielen dadurch, dass statt des Merkmals $M^{(3)}$ ein Merkmal $M^{(8)}$ verwendet wird, das ebenfalls ein Maß dafür betrifft, dass Orte, für die die Abweichungsdaten des Abweichungsdatensatzes auf eine Irregularität in Form einer Anhaftung oder einer Falte hinweisen, räumlich gehäuft auftreten. Dazu führt die Steuer- und Auswerteeinrichtung nach Ermittlung der Abweichungsdaten, die auf eine Irregularität in Form einer Anhaftung oder Falte hinweisen, hier also negativ sind, für diese ermittelten Abweichungsdaten eine Blob-Analyse durch. Ein Blob bezeichnet dabei eine Menge von Orten, die ein zusammenhängendes Gebiet bilden und deren Abweichungsdaten auf eine Irregularität in Form einer Anhaftung oder Falte hinweisen.

Als Merkmal $M^{(8)}$ wird dann die Anzahl der Orte in der größten ermittelten Menge verwendet.

In Weiterbildungen dieses Ausführungsbeispiels kann.als weiteres Merkmal ein Maß dafür ermittelt werden, dass die Orte in den ermittelten Mengen bzw. Blobs jeweils innerhalb einer die Orte möglichst eng umschließenden Form, im Beispiel eines Parallelogramms oder Rechtecks liegen. Dazu kann das Verhältnis aus der Anzahl der Orte des jeweiligen Blobs und der Fläche des Parallelogramms oder Rechtecks als Merkmal verwendet werden. Noch ein weiteres Ausführungsbeispiel unterscheidet sich von den zuvor beschriebenen Ausführungsbeispielen dadurch, dass vor der Ermittlung des Abweichungsdatensatzes von der Steuer- und Auswerteinrichtung geprüft wird, ob Ultraschalldaten des Ultraschalldatensatzes Problembereichen des Wertdokuments, beispielsweise Löchern, Rissen oder Eselsohren, entsprechen. Im Fall von Eselsohren umfasst der Problembereich zum einen den Abschnitt, aus dem die dem Eselsohr entsprechende Ecke des Wertdokuments herausgefaltet wurde, und zum anderen der Abschnitt, über den die Ecke durch Falten gelegt wurde.

Hierzu kann ein Bild des optischen Remissionssensors oder vorzugsweise des optischen Transmissionssensors verwendet werden. Alternativ können die Ultraschalltransmissionsdaten mit einem vorgegebenen Schwellwert verglichen werden. Überschreitet ein jeweiliger Ultraschalltransmissionswert für einen Ort den Schwellwert, entspricht dieser einem Problembereich bzw. liegt in diesem.

Entspricht ein Ort einem Problembereich bzw. liegt ein Ort in einem Problembereich, wird der Ultraschalltransmissionswert durch einen für den Ort vorgegebenen Ersatztransmissionswert, der charakteristisch für ein unbeschädigtes Wertdokument des vorgegebenen Wertdokumenttyps ist ersetzt. Im Beispiel wird als Ersatztransmissionswert der Ultraschalltransmissionswert des mittleren Vektors an demselben Ort verwendet. Die anderen Verfahrensschritte sind unverändert.

Die beschriebenen Schritte und Merkmale der beschriebenen Ausführungsbeispiele können ausgetauscht oder kombiniert werden.

Zur Ermittlung der Trainingsultraschalldatensätze kann folgendes Verfahren zum Erzeugen von Trainingsultraschalldaten zur Anpassung von Parametern eines Verfahrens zum Prüfen eines Wertdokumentes eines vorgegebenen Wertdokumenttyps auf das Vorhandensein wenigstens einer Irregularität in Form wenigstens einer Anhaftung, im Beispiel eines Klebestreifens, oder wenigstens einer Falte ausgeführt werden. Im Folgenden werden die Trainingsultraschalldaten bzw. Trainingsultraschalldatensätze der Einfachheit halber nur als Trainingsdaten bzw. Trainingsdatensätze bezeichnet.

Für die vorgegebenen Referenzwertdokumente, die zur Ermittlung des Modells verwendet wurden, werden Ultraschalldatensätze erfasst, die jeweils ortsaufgelöst wenigstens eine Ultraschalleigenschaft, vorzugsweise die Ultraschalltransmission, des jeweiligen Referenzwertdokuments beschreiben. Diese sind vorzugsweise mit dem gleichen Ultraschalltransmissionssensor erfasst. Diese Referenzwertdokumente weisen, da sie auch zur Anpassung des Modells verwendet wurden, eine Irregularität in Form wenigstens einer Anhaftung bzw. hier eines Klebestreifens oder einer Falte nicht auf. Diese Ultraschalldatensätze werden als Trainingsdatensätze gespeichert. Für jeden dieser Trainingsdatensätze werden nun mittels einer Datenverarbeitungseinrichtung weitere Trainingsdatensätze erzeugt, die Wertdokumenten des vorgegebenen Wertdokumenttyps mit wenigstens einer Irregularität in Form eines anhaftenden Klebestreifens oder einer Falte entsprechen.

Die Orte für Änderungen sind so gegeben, dass die Form und/oder Lage des anhaftenden Klebestreifens bzw. der Falte aus einer vorgegebenen Menge möglicher Formen bzw. Lagen ausgewählt sind. Weiter sind die Größen der Änderung der Ultraschalltransmission durch den Klebestreifen bzw. der Falte aus einem vorgegebenen Bereich ausgewählt. Dazu sind Bereiche für die möglichen Längen, Breiten und Dicken von Klebestreifen vorgegeben. Weiter wird angenommen, dass die Klebestreifen zufällig gegenüber den Kanten des jeweiligen Wertdokuments geneigt und gegenüber den Kanten versetzt sein können. Weiter sollen die Klebestreifen eine Rechteckform aufweisen, soweit sie nicht über den Rand des Wertdokuments hinausreichen würden. In letzterem Fall wird davon ausgegangen, dass die Klebestreifen am Rand des Wertdokuments enden.

Es werden nun die Lage, d. h. Position und Neigung auf dem Wertdokument, und die Form, unter anderem Länge und Breite, sowie die Dicke des Klebestreifens bzw. die Lage und Form einer Falte zufällig innerhalb des jeweils gegebenen Bereichs gewählt. Für die durch die Lage und die Form gegebenen Orte werden die Ultraschalldaten des Ultraschalldatensatzes für das Referenzwertdokument dann so geändert, dass die Änderung der Ultraschalltransmission einer Schallintensitäts- bzw. Schallamplitudenreduktion durch einen Klebestreifen der gegebenen Dicke oder einer Falte entspricht. Die so erzeugten weiteren Trainingsdatensätze werden gespeichert.

Diese Trainingsdatensätze können dann statt der in den vorherigen Ausführungsbeispielen erwähnten Trainingsdaten oder zusätzlich zu diesen verwendet werden.

Weitere Ausführungsbeispiele unterscheiden sich von den zuvor beschriebenen Ausführungsbeispielen dadurch, dass statt der Prüfung auf eine Irregularität in Form wenigstens eine Anhaftung oder Falte eine Prüfung auf Irregularitäten in Form von Materialabträge bei Wertdokumenten mit einer Polymerschicht, auf der eine opake Deckschicht aufgebracht ist, durchgeführt wird. Das Merkmal $M^{(4)}$ wird dann nicht verwendet. Weiter sind die Formeln für die Merkmale dahingehend anzupassen, dass ein Materialabtrag zu einer positiven Abweichung führt und nicht zu einer negativen.

Noch weitere Ausführungsbeispiele unterscheiden sich von den zuvor beschriebenen Ausführungsbeispielen dadurch, dass als Ultraschalleigenschaft nicht die Ultraschalltransmission sondern die Ultraschallremission verwendet wird. Der Transmissionsultraschallsensor ist dann durch einen entsprechenden Ultraschallremissionssensor ersetzt. Eine Anhaftung oder Falte erhöht in diesem Fall die Ultraschallremission, so dass die Verfahrensschritte entsprechend anzupassen sind. Ein Materialabtrag wird dagegen die Ultraschallremission reduzieren, so dass die Verfahrensschritte dementsprechend anzupassen sind.

**Patentansprüche**

1. Verfahren zum Prüfen eines Wertdokumentes (12) eines vorgegebenen Wertdokumenttyps auf das Vorhandensein wenigstens einer Irregularität wenigstens eines vorgegebenen Typs, bei dem

   - ein Ultraschalldatensatz erfasst wird, der ortsaufgelöst wenigstens eine Ultraschalleigenschaft, vorzugsweise die Ultraschalltransmission, des Wertdokuments beschreibt,
   - ein Abweichungsdatensatz ermittelt wird, der ortsaufgelöst eine Abweichung zwischen dem Ultraschalldatensatz und einem Modell beschreibt und so ermittelt ist, dass die durch ihn beschriebene Abweichung in Bezug auf das Modell minimal ist, wobei das Modell ein Modell für die Ortsabhängigkeit der wenigstens einen Ultraschalleigenschaft von Referenzwertdokumenten des vorgegebenen Wertdokumenttyps ohne Irregularitäten des wenigstens einen vorgegebenen Typs umfasst und das Modell eine Vielzahl von sich voneinander unterscheidenden Modelldatensätzen, die die wenigstens eine Ultraschalleigenschaft ortsabhängig beschreiben, definiert, und
   - unter Verwendung des Abweichungsdatensatzes geprüft wird, ob ein Hinweis auf eine Irregularität des wenigstens einen vorgegebenen Typs auf dem Wertdokument vorliegt.

2. Verfahren nach Anspruch 1, bei dem die Ultraschalldatensätze jeweils Ultraschalldaten für eine für den Wertdokumenttyp vorgegebene Anzahl N von Orten enthalten, die jeweils die wenigstens eine Ultraschalleigenschaft für die jeweiligen Orte beschreiben, und bei dem die Modelldatensätze jeweils Modelldaten für die wenigstens eine Ultraschalleigenschaft für die vorgegebene Anzahl N von Orten enthalten und in einem vorgegebenen Teilbereich eines N-dimensionalen Raums möglicher Ultraschalldaten liegen.

3. Verfahren nach Anspruch 2, bei dem der Teilbereich derart vorgegeben ist, dass Modelldatensätze bei einer Darstellung des Ultraschalldatensatzes und der Modelldatensätze als Vektoren gleicher Dimension durch eine Summe aus einem mittleren Vektor und einer Linearkombination von wenigstens fünf vorgegebenen Teilbereichsvektoren darstellbar sind.

4. Verfahren nach Anspruch 3, bei dem der mittlere Vektor und die Teilbereichsvektoren durch Analyse von Referenzultraschalldatensätzen für vorgegebene Referenzwertdokumente des vorgegebenen Wertdokumenttyps ohne Irregularitäten des wenigstens einen vorgegebenen Typs erhältlich, vorzugsweise erhalten sind.

5. Verfahren nach Anspruch 4, bei dem die Analyse eine Hauptkomponentenanalyse umfasst, wobei der bei der Hauptkomponentenanalyse ermittelte Mittelwert dem mittleren Vektor und die bei der Hauptkomponentenanalyse ermittelten Hauptkomponenten den Teilbereichsvektoren entsprechen.

6. Verfahren nach einem der Ansprüche 1 bis 5, bei dem das Modell eine statistische Modellverteilung aufweist, die eine Wahrscheinlichkeit für das Auftreten von Modelldatensätzen beschreibt.

7. Verfahren nach einem der vorhergehenden Ansprüche, bei dem für den Abweichungsdatensatz wenigstens ein Merkmal ermittelt wird, und beim Prüfen, ob ein Hinweis auf eine Irregularität des wenigstens einen vorgegebenen Typs auf dem Wertdokument vorliegt, das wenigstens eine Merkmale verwendet wird, oder bei dem vorzugsweise für den Abweichungsdatensatz wenigstens zwei Merkmale ermittelt werden, und beim Prüfen, ob ein Hinweis auf eine Irregularität des wenigstens einen vorgegebenen Typs auf dem Wertdokument vorliegt, die wenigstens zwei Merkmale verwendet werden.

8. Verfahren nach Anspruch 7, bei dem das Merkmal oder eines der Merkmale eine Wahrscheinlichkeit dafür beschreibt, dass der Ultraschalldatensatz oder der Abweichungsdatensatz oder der dem Abweichungsdatensatz entsprechende Modelldatensatz gemäß dem Modell auftritt.

9. Verfahren nach Anspruch 7 oder 8, bei dem das Merkmal oder eines der Merkmale die Größe der durch den Abweichungsdatensatz beschriebenen Abweichung beschreibt.

10. Verfahren nach einem der Ansprüche 7 bis 9, bei dem das Merkmal oder eines der Merkmale ein Maß für die Stärke der Abweichungen an Orten darstellen, an denen eine aus den Abweichungsdaten des Abweichungsdatensatzes ermittelbare Differenz zwischen Ultraschalltransmission und Modell auf eine Irregularität des wenigstens einen vorgegebenen Typs hinweist.

11. Verfahren nach einem der Ansprüche 7 bis 10, bei dem das Merkmal oder eines der Merkmale ein Maß dafür darstellt, dass Orte, für die die Abweichungsdaten des Abweichungsdatensatzes auf eine Irregularität des wenigstens einen vorgegebenen Typs hinweisen, räumlich gehäuft auftreten, und dass vorzugsweise bei der Ermittlung des Maßes auch die Größen der Abweichungen berücksichtigt werden.

12. Verfahren nach einem der Ansprüche 7 bis 11, bei dem das Merkmal oder eines der Merkmale ein Maß für das Vorliegen von Abweichungen an Orten, für die die Abweichungsdaten des Abweichungsdatensatzes auf eine Irregularität des wenigstens einen vorgegebenen Typs hinweisen, entlang einer Linie einer vorgegebenen Form, vorzugsweise einer Geraden, darstellt.

13. Verfahren nach einem der Ansprüche 7 bis 12, bei dem beim Prüfen, ob ein Hinweis auf eine Irregularität des wenigstens einen vorgegebenen Typs auf dem Wertdokument vorliegt, eine Klassifikation mittels einer Support-Vektor-Maschine unter Verwendung des wenigstens einen Merkmals oder der Merkmale durchgeführt wird.

14. Verfahren nach einem der vorhergehenden Ansprüche, bei dem Irregularitäten des wenigstens eine vorgegebene Typ Irregularitäten vom Typ einer Anhaftung, vorzugsweise eines Klebestreifens und/oder Irregularitäten vom Typ einer Falte umfassen oder, bei dem Irregularitäten des wenigstens eine vorgegebene Typ Irregularitäten vom Typ eines Materialabtrags umfassen.

**EP 3 044 767 B1**

15. Vorrichtung zum Prüfen eines Wertdokumentes (12) eines vorgegebenen Wertdokumenttyps auf das Vorhandensein wenigstens einer Irregularität wenigstens einen vorgegebenen Typs, mit einer Auswerteeinrichtung (48), die dazu ausgebildet ist, ein Verfahren nach einem der Ansprüche 1 bis 14 auszuführen, und ausgebildet ist

- einen Ultraschalldatensatz zu erfassen, der ortsaufgelöst wenigstens eine Ultraschalleigenschaft, vorzugsweise die Ultraschalltransmission, des Wertdokuments beschreibt,
- einen Abweichungsdatensatz zu ermitteln, der ortsaufgelöst eine Abweichung zwischen dem Ultraschalldatensatz und einem Modell beschreibt und so ermittelt ist, dass die durch ihn beschriebene Abweichung in Bezug auf das Modell minimal ist, wobei das Modell ein Modell für die Ortsabhängigkeit der wenigstens einen Ultraschalleigenschaft von Referenzwertdokumenten des vorgegebenen Wertdokumenttyps ohne Irregularitäten des wenigstens einen vorgegebenen Typs umfasst und das Modell eine Vielzahl von sich voneinander unterscheidenden Modelldatensätzen, die die wenigstens eine Ultraschalleigenschaft ortsabhängig beschreiben, definiert, und
- unter Verwendung des Abweichungsdatensatzes zu prüfen, ob ein Hinweis auf wenigstens eine Irregularität des wenigstens einen vorgegebenen Typs auf dem Wertdokument vorliegt.

16. Vorrichtung nach Anspruch 15, die weiter einen Ultraschallsensor (44) zur ortsaufgelösten Messung der wenigstens einen Ultraschalleigenschaft eines Wertdokuments und Bildung eines Ultraschalldatensatzes für das Wertdokument aufweist, und
bei der die Auswerteeinrichtung (48) mit dem Ultraschallsensor (44) über eine Signalverbindung gekoppelt und dazu ausgebildet ist, als Ultraschalldatensatz einen Ultraschalldatensatz des Ultraschallsensors zu erfassen.

17. Computerprogramm zur Ausführung mittels einer Datenverarbeitungseinrichtung, das Programmcode aufweist, bei dessen Ausführung die Datenverarbeitungseinrichtung ein Verfahren nach einem der Ansprüche 1 bis 14 ausführt.

18. Datenträger, der mittels einer Datenverarbeitungseinrichtung lesbar ist und auf dem ein Computerprogramm nach Anspruch 17 gespeichert ist.

19. Verfahren zum Erzeugen von Trainingsultraschalldaten zum Anpassen von Parametern eines Verfahrens nach einem der Ansprüche 1 bis 14 zum Prüfen eines Wertdokuments (12)

eines vorgegebenen Wertdokumenttyps auf das Vorhandensein wenigstens einer Irregularität wenigstens eines vorgegebenen Typs, bei dem
für vorgegebene Referenzwertdokumente des vorgegebenen Wertdokumenttyps Ultraschalldatensätze erfasst werden, die jeweils ortsaufgelöst wenigstens eine Ultraschalleigenschaft, vorzugsweise die Ultraschalltransmission, des jeweiligen Referenzwertdokuments beschreiben, wobei die vorgegebenen Referenzwertdokumente eine Irregularität des wenigstens einen vorgegebenen Typs nicht aufweisen,
wenigstens einige der Ultraschalldatensätze als Trainingsultraschalldatensätze gespeichert werden,
aus wenigstens einigen der Ultraschalldatensätze weitere Trainingsultraschalldatensätze erzeugt werden, indem für jeweils gegebene Orte die Ultraschalldaten des Ultraschalldatensatzes so geändert werden, dass die Änderung einer gegebene Irregularität des wenigstens einen vorgegebenen Typs entspricht, und die weiteren Trainingsultraschalldatensätze gespeichert werden, und
vorzugsweise die Parameter des Prüfverfahrens unter Verwendung der Trainingsultraschalldatensätze angepasst werden.

20. Verfahren nach Anspruch 19, bei dem bei der Erzeugung eines der weiteren Trainingsultraschalldatensätze jeweils die Orte so gegeben sind, dass die Form und/oder Lage der Irregularität des vorgegebenen Typs aus einer vorgegebenen Menge möglicher Formen bzw. Lagen ausgewählt sind.

21. Verfahren nach Anspruch 19 oder 20, bei dem bei der Erzeugung eines der weiteren Trainingsultraschalldatensätze bzw. des einen der weiteren Trainingsultraschalldatensätze die Größe der Änderung durch die Irregularität des vorgegebenen Typs aus einem vorgegebenen Bereich oder einer vorgegebenen Menge ausgewählt ist.

**Claims**

1. A method for checking a value document of a specified value document type for the presence of at least one irregularity of at least one specified type, in which

- an ultrasound data record is captured, which describes in locally resolved fashion at least one ultrasound property, preferably the ultrasound transmission, of the value document,
- a deviation data record is ascertained, which describes in locally resolved fashion a deviation between the ultrasound data record and a model and is ascertained such that the deviation described thereby is minimal with respect to the model, wherein the model comprises a model for the location dependence of the at least one ultrasound property of reference value documents of the specified value document type without irregularities of the at least one specified type and the model defines a plurality of model data records differing from each other, which describe the at least one ultrasound property in location-dependent fashion, and
- using the deviation data record, it is checked whether an indication of an irregularity of the at least one specified type is present on the value document.

2. The method according to claim 1, in which the ultrasound data records respectively include ultrasound data for a number N of places which is specified for the value document type, which data respectively describe the at least one ultrasound property for the respective places, and in which the model data records respectively include model data for the at least one ultrasound property for the specified number N of places and lie in a specified partial region of an N-dimensional space of possible ultrasound data.

3. The method according to claim 2, in which the partial region is specified such that model data records are representable, upon a representation of the ultrasound data record and the model data records as vectors of the same dimension, by a sum of a mean vector and a linear combination of at least five specified partial-region vectors.

4. The method according to claim 3, in which the mean vector and the partial-region vectors are obtainable, or preferably obtained by analysis of reference ultrasound data records for specified reference value documents of the specified value document type without irregularities of the at least one specified type.

5. The method according to claim 4, in which the analysis comprises a principal component analysis, wherein the mean value ascertained upon the principal component analysis corresponds to the mean vector and the principal components ascertained upon the main component analysis correspond to the partial-region vectors.

6. The method according to any of claims 1 to 5, in which the model has a statistical model distribution which describes a probability of the occurrence of model data records.

7. The method according to any of the preceding claims, in which at least one feature is ascertained for the deviation data record, and upon checking whether an indication of an irregularity of the at least one specified type is present on the value document the at least one feature is employed, or in which preferably at least two features are ascertained for the deviation data record, and upon checking whether an indication of an irregularity of the at least one specified type is present on the value document the at least two features are employed.

8. The method according to claim 7, in which the feature or one of the features describes a probability that the ultrasound data record or the deviation data record or the model data record corresponding to the deviation data record occurs according to the model.

9. The method according to claim 7 or 8, in which the feature or one of the features describes the quantity of the deviation described by the deviation data record.

10. The method according to any of claims 7 to 9, in which the feature or one of the features represents a measure for the magnitude of the deviations at places at which a difference between ultrasound transmission and model, ascertainable from the deviation data of the deviation data record, indicates an irregularity of the at least one specified type.

11. The method according to any of claims 7 to 10, in which the feature or one of the features represents a measure of places, for which the deviation data of the deviation data record indicate an irregularity of the at least one specified type, occurring spatially cumulated, and that preferably upon the ascertainment of the measure also the quantities of the deviations are taken into account.

12. The method according to any of claims 7 to 11, in which the feature or one of the features represents a measure for the presence of deviations at places for which the deviation data of the deviation data record indicate an irregularity of the at least one specified type, along a line of a specified form, preferably a straight line.

**13.** The method according to any of claims 7 to 12, in which upon checking whether an indication of an irregularity of the at least one specified type is present on the value document a classification is carried out by means of a support vector machine, using the at least one feature or the features.

**14.** The method according to any of the preceding claims, in which irregularities of the at least one specified type comprise irregularities of the type of an adhesion, preferably of an adhesive strip and/or irregularities of a crease type or in which irregularities of the at least one specified type comprise irregularities of the type of a material removal.

**15.** An apparatus for checking a value document (12) of a specified value document type for the presence of at least one irregularity of at least one specified type, having
an evaluation device (48) which is configured for executing a method according to any of claims 1 to 14, and is configured for

- capturing an ultrasound data record which describes in locally resolved fashion at least one ultrasound property, preferably the ultrasound transmission, of the value document,
- ascertaining a deviation data record which describes in locally resolved fashion a deviation between the ultrasound data record and a model and is ascertained such that the deviation described thereby is minimal with respect to the model, wherein the model comprises a model for the location dependence of the at least one ultrasound property of reference value documents of the specified value document type without irregularities of the at least one specified type and the model defines a plurality of model data records differing from each other which describe the at least one ultrasound property in location-dependent fashion, and
- using the deviation data record, checking whether an indication of at least one irregularity of the at least one specified type is present on the value document.

**16.** The apparatus according to claim 15, which further has an ultrasound sensor (44) for the locally resolved measurement of the at least one ultrasound property of a value document and formation of an ultrasound data record for the value document, and
in which the evaluation device (48) is coupled to the ultrasound sensor (44) via a signal connection and is configured to capture an ultrasound data record of the ultrasound sensor as an ultrasound data record.

**17.** A computer program for execution by means of a data processing device, which has program code, upon the execution of which the data processing device executes a method according to any of claims 1 to 14.

**18.** A data carrier which is readable by means of a data processing device and on which a computer program according to claim 17 is stored.

**19.** A method for generating ultrasound training data for adapting parameters of a method according to any of claims 1 to 14 for checking a value document (12) of

a specified value document type for the presence of at least one irregularity of at least one specified type, in which for specified reference value documents of the specified value document type there are captured ultrasound data records which respectively describe in locally resolved fashion at least one ultrasound property, preferably the ultrasound transmission, of the respective reference value document, wherein the specified reference value documents do not have an irregularity of the at least one specified type,
at least some of the ultrasound data records are stored as ultrasound training data records,
from at least some of the ultrasound data records there are generated further ultrasound training data records, by changing, for respectively given places, the ultrasound data of the ultrasound data record in such a way that the change corresponds to a given irregularity of the at least one specified type, and the further ultrasound training data records are stored, and
preferably the parameters of the checking method are adapted using the ultrasound training data records.

**20.** The method according to claim 19, in which upon the generation of one of the further ultrasound training data records the places are respectively given such that the form and/or the position of the irregularity of the specified type is chosen from a specified set of possible forms or positions.

**21.** The method according to claim 19 or 20, in which upon the generation of one of the further ultrasound training data records or of the one of the further ultrasound training data records, the quantity of the change by the irregularity of the specified type is chosen from a specified region or a specified set.

**Revendications**

1. Procédé de vérification d'un document de valeur (12) d'un type prédéterminé de document de valeur pour déterminer s'il y a au moins une irrégularité d'au moins un type prédéterminé, dans lequel

   - un jeu de données d'ultrasons est saisi, lequel décrit en résolution locale au moins une propriété d'ultrasons, de préférence la transmission d'ultrasons, du document de valeur,
   - un jeu de données d'écart est déterminé, lequel décrit en résolution locale un écart entre le jeu de données d'ultrasons et un modèle et est déterminé de telle façon que l'écart décrit par lui est minimal par rapport au modèle, cependant que le modèle comprend un modèle pour la dépendance de la localisation de la au moins une propriété d'ultrasons de documents de valeur de référence du type prédéterminé de document de valeur sans irrégularités du au moins un type prédéterminé et le modèle définit une pluralité de jeux de données de modèle se différenciant les uns des autres qui décrivent en résolution locale la au moins une propriété d'ultrasons, et
   - en utilisant le jeu de données d'écart, il est vérifié s'il y a un signe d'irrégularité du au moins un type prédéterminé sur le document de valeur.

2. Procédé selon la revendication 1, dans lequel les jeux de données d'ultrasons contiennent respectivement des données d'ultrasons pour un nombre N, prédéterminé pour le type de document de valeur, d'emplacements décrivant respectivement la au moins une propriété d'ultrasons pour les emplacements respectifs, et dans lequel les jeux de données de modèle contiennent respectivement des données de modèle pour la au moins une propriété d'ultrasons pour le nombre N prédéterminé d'emplacements et se trouvent dans une zone partielle prédéterminée d'un espace N-dimensionnel à N dimensions de données d'ultrasons possibles.

3. Procédé selon la revendication 2, dans lequel la zone partielle est prédéterminée de telle façon que des jeux de données de modèle, lors d'une représentation du jeu de données d'ultrasons et des jeux de données de modèle, peuvent être représentés en tant que vecteurs de même dimension par une somme d'un vecteur moyen et d'une combinaison linéaire d'au moins cinq vecteurs prédéterminés de zone partielle.

4. Procédé selon la revendication 3, dans lequel le vecteur moyen et les vecteurs de zone partielle peuvent être obtenus, de préférence sont obtenus par analyse de jeux de données d'ultrasons de référence pour des documents de valeur de référence prédéterminés du type de document de valeur prédéterminé sans irrégularités du au moins un type prédéterminé.

5. Procédé selon la revendication 4, dans lequel l'analyse comprend une analyse de composants principaux, cependant que la valeur moyenne déterminée lors de l'analyse de composants principaux correspond au vecteur moyen et les composants principaux déterminés lors de l'analyse de composants principaux correspondent aux vecteurs de zone partielle.

6. Procédé selon une des revendications de 1 à 5, dans lequel le modèle présente une répartition statistique de modèle qui décrit une probabilité d'apparition de jeux de données de modèle.

7. Procédé selon une des revendications précédentes, dans lequel, pour le jeu de données d'écart, au moins une caractéristique est déterminée, et lors de la vérification pour déterminer s'il y a un signe d'irrégularité du au moins un type prédéterminé sur le document de valeur, la au moins une caractéristique est utilisée, ou dans lequel, de préférence, pour le jeu de données d'écart, au moins deux caractéristiques sont déterminées, et lors de la vérification pour déterminer s'il y a un signe d'irrégularité du au moins un type prédéterminé sur le document de valeur, les au moins deux caractéristiques sont utilisées.

8. Procédé selon la revendication 7, dans lequel la caractéristique ou une des caractéristiques décrit une probabilité que le jeu de données d'ultrasons ou le jeu de données d'écart ou le jeu de données de modèle correspondant au jeu de données d'écart apparaisse suivant le modèle.

9. Procédé selon la revendication 7 ou 8, dans lequel la caractéristique ou une des caractéristiques décrit la grandeur de l'écart décrit par le jeu de données d'écart.

10. Procédé selon une des revendications de 7 à 9, dans lequel la caractéristique ou une des caractéristiques représentent une mesure de l'ampleur des écarts à des emplacements auxquels une différence, déterminable à partir des données d'écart du jeu de données d'écart, entre transmission d'ultrasons et modèle est signe d'une irrégularité du au moins un type prédéterminé.

11. Procédé selon une des revendications de 7 à 10, dans lequel la caractéristique ou une des caractéristiques représente une mesure de ce que des emplacements pour lesquels les données d'écart du jeu de données d'écart sont signe d'une irrégularité du au moins un type prédéterminé apparaissent localement en plus grand nombre et que, de préférence, lors de la détermination de la mesure les grandeurs des écarts sont aussi prises en compte.

12. Procédé selon une des revendications de 7 à 11, dans lequel la caractéristique ou une des caractéristiques représente une mesure de l'existence d'écarts à des emplacements pour lesquels les données d'écart du jeu de données d'écart sont signe d'une irrégularité du au moins un type prédéterminé, le long d'une ligne d'une forme prédéterminée, de préférence une droite.

13. Procédé selon une des revendications de 7 à 12, dans lequel, lors de la vérification pour déterminer s'il y a un signe d'une irrégularité du au moins un type prédéterminé sur le document de valeur, une classification est effectuée à l'aide d'une machine à vecteur de support en utilisant la au moins une caractéristique ou les caractéristiques.

14. Procédé selon une des revendications précédentes, dans lequel des irrégularités du au moins un type prédéterminé comprennent des irrégularités du type d'une adhérence, de préférence d'un ruban adhésif et/ou des irrégularités du type d'un pli, ou dans lequel des irrégularités du au moins un type prédéterminé comprennent des irrégularités du type d'un enlèvement de matière.

15. Dispositif de vérification d'un document de valeur (12) d'un type prédéterminé de document de valeur pour déterminer s'il y a au moins une irrégularité d'au moins un type prédéterminé, ayant
un équipement d'évaluation (48) conçu pour exécuter un procédé selon une des revendications de 1 à 14, et conçu pour

- saisir un jeu de données d'ultrasons qui décrit en résolution locale au moins une propriété d'ultrasons, de préférence la transmission d'ultrasons, du document de valeur,
- déterminer un jeu de données d'écart qui décrit en résolution locale un écart entre le jeu de données d'ultrasons et un modèle et est déterminé de telle façon que l'écart décrit par lui est minimal par rapport au modèle, cependant que le modèle comprend un modèle pour la dépendance de la localisation de la au moins une propriété d'ultrasons de documents de valeur de référence du type prédéterminé de document de valeur sans irrégularités du au moins un type prédéterminé et le modèle définit une pluralité de jeux de données de modèle se différenciant les uns des autres qui décrivent en résolution locale la au moins une propriété d'ultrasons, et
- vérifier en utilisant le jeu de données d'écart s'il y a un signe d'au moins une irrégularité du au moins un type prédéterminé sur le document de valeur.

16. Dispositif selon la revendication 15, lequel comporte en outre un capteur d'ultrasons (44) pour la mesure en résolution locale de la au moins une propriété d'ultrasons d'un document de valeur et la constitution d'un jeu d'ultrasons pour le document de valeur, et dans lequel le dispositif d'évaluation (48) est couplé au capteur d'ultrasons (44) par l'intermédiaire d'une liaison de signaux et est conçu pour saisir en tant que jeu de données d'ultrasons un jeu de données d'ultrasons du capteur d'ultrasons.

17. Produit programme d'ordinateur pour exécution au moyen d'un équipement de traitement de donnés muni de code de programme lors de l'exécution duquel l'équipement de traitement de donnés exécute un procédé selon une des revendications de 1 à 14.

18. Support de données qui est lisible au moyen d'un équipement de traitement de donnés et sur lequel est mémorisé un programme d'ordinateur selon la revendication 17.

19. Procédé de génération de données d'ultrasons d'entraînement pour l'adaptation de paramètres d'un procédé selon une des revendications de 1 à 14 pour la vérification d'un document de valeur (12) d'un type prédéterminé de document de valeur pour déterminer s'il y a au moins une irrégularité d'au moins un type prédéterminé,

dans lequel
pour des documents de valeur de référence prédéterminés du type prédéterminé de document de valeur, des jeux de données d'ultrasons sont saisis, lesquels décrivent respectivement en résolution locale au moins une propriété d'ultrasons, de préférence la transmission d'ultrasons, du document de valeur respectif de référence, cependant que les documents de valeur de référence prédéterminés ne présentent pas une irrégularité du au moins un type prédéterminé,

au moins quelques uns des jeux de données d'ultrasons sont mémorisés en tant que jeux de données d'ultrasons d'entraînement,

à partir d'au moins quelques uns des jeux de données d'ultrasons, d'autres jeux de données d'ultrasons d'entraînement sont générés, ce qui a lieu en ce que, pour des emplacements respectivement donnés, les données d'ultrasons du jeux de données d'ultrasons sont modifiées de telle façon que la modification correspond à une irrégularité donnée du au moins un type prédéterminé, et les autres jeux de données d'ultrasons d'entraînement sont mémorisés, et

de préférence, les paramètres du procédé de vérification sont adaptés en utilisant les jeux de données d'ultrasons d'entraînement.

20. Procédé selon la revendication 19, dans lequel, lors de la génération d'un des autres jeux de données d'ultrasons d'entraînement, respectivement les emplacements sont donnés de telle façon que la forme et/ou la position de l'irrégularité du type prédéterminé sont choisies parmi une quantité prédéterminée de formes ou position possibles.

21. Procédé selon la revendication 19 ou 20, dans lequel, lors de la génération d'un des autres jeux de données d'ultrasons d'entraînement ou du un des autres jeux de données d'ultrasons d'entraînement, la grandeur de la modification par l'irrégularité du type prédéterminé est choisie parmi une zone prédéterminée ou une quantité prédéterminée.

Fig. 1

Fig. 2

Fig. 3

Fig. 4

S10 — Erfassen von ortsaufgelösten Ultraschalltransmissionsdaten

S12 — Ermitteln des Wertdokumenttyps

S14 — Ermitteln eines Abweichungsdatensatzes

S16 — Ermitteln von Merkmalen aus dem Abweichungsdatensatz

S18 — Prüfen, ob ein Hinweis für einen Fehler auf dem Wertdokument vorliegt

S20 — Bildung eines Hinweissignals in Abhängigkeit von dem Ergebnis in Schritt S18

Fig. 5

S10 — **Erfassen von ortsaufgelösten Ultraschalltransmissionsdaten**

S12 — **Ermitteln des Wertdokumenttyps**

S14 — **Ermitteln eines Abweichungsdatensatzes**

S16' — **Ermitteln von Merkmalen aus dem Abweichungsdatensatz**

S18' — **Prüfen, ob ein Hinweis für einen Fehler auf dem Wertdokument vorliegt**

S20' — **Bildung eines Hinweissignals in Abhängigkeit von dem Ergebnis in Schritt S18'**

**Fig. 6**

S10 — Erfassen von ortsaufgelösten Ultraschalltransmissionsdaten

S12 — Ermitteln des Wertdokumenttyps

S14 — Ermitteln eines Abweichungsdatensatzes

S16 — Ermitteln von Merkmalen aus dem Abweichungsdatensatz

S18" — Prüfen, ob ein Hinweis für einen Fehler auf dem Wertdokument vorliegt

S20" — Bildung eines Hinweissignals in Abhängigkeit von dem Ergebnis in Schritt S18"

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6595060 B2

- US 20110226061 A1

**In der Beschreibung aufgeführte Nicht-Patentliteratur**

- **PLATT, JOHN C.** Probabilistic Outputs for Support Vector Machines and Comparisons to Regularized Likelihood Methods. *Advances in Large Margin Classifiers,* 1999, 61-74